# EUROPEAN PATENT SPECIFICATION

(11) **EP 0 901 672 B1**
(45) Date of publication and mention of the grant of the patent: **12.11.2003**
(21) Application number: 97922458.1
(22) Date of filing: 24.04.1997
(51) Int. Cl.: G07F 7/10

(54) **A SYSTEM, METHOD AND ARTICLE OF MANUFACTURE FOR NETWORK ELECTRONIC AUTHORIZATION UTILIZING AN AUTHORIZATION INSTRUMENT**
EIN SYSTEM UND VERFAHREN ZUM EINRICHTEN VON ELEKTRONISCHEM BEZAHLEN UND KREDITEINZUG ÜBER EIN NETZWERK UNTER VERWENDUNG EINES ZAHLUNGSMITTELHALTERS
SYSTEME, PROCEDE ET ARTICLE FABRIQUE POUR AUTORISATION ELECTRONIQUE SUR RESEAU AU MOYEN D'UN INSTRUMENT D'AUTORISATION

(30) Priority: 26.04.1996 US 638355; 26.04.1996 US 641992
(43) Date of publication of application: 17.03.1999
(73) Proprietor: Hewlett-Packard Company, Fort Collins, CO 80527-2400 (US)
(72) Inventor: WILLIAMS, Humphrey, Palo Alto, CA 94306 (US); HUGHES, Kevin, San Mateo, CA 94402 (US); PARMAR, Bipinkumar, G., Cupertino, CA 95014 (US)
(74) Representative: Garratt, Peter Douglas
(86) International application number: US9706938
(87) International publication number: WO97041540

(56) References cited:
- EP-A- 0 527 639
- EP-A- 0 644 513
- WO-A-92/11598
- WO-A-95/26085
- SIRBU M ET AL: "NETBILL: AN INTERNET COMMERCE SYSTEM OPTIMIZED FOR NETWORK DELIVERED SERVICES" DIGEST OF PAPERS OF THE COMPUTER SOCIETY COMPUTER CONFERENCE (SPRING) COMPCON, TECHNOLOGIES FOR THE INFORMATION SUPERHIGHWAY SAN FRANCISCO, MAR. 5 - 9, 1995, no. CONF. 40, 5 March 1995, INSTITUTE OF ELECTRICAL AND ELECTRONICS ENGINEERS, pages 20-25, XP000577034
- SINGLETON A: "CASH ON THE WIREHEAD" BYTE, vol. 20, no. 6, 1 June 1995, pages 71/72, 74, 76-78, XP000509328

## Description

### Field Of The Invention

The present invention relates to the electronic payment or other authorization for access to goods and services purchased over a communication network, and more specifically, it relates to an ergonomic, graphical user network interface which simulates a real life transaction for the credit card, cash or other payment of goods.

### Background of the Invention

The present invention relates to an electronic graphical representation of a monetary system for implementing electronic money payments as an alternative medium of economic exchange to cash, checks, credit and debit cards, and electronic funds transfer. The Electronic-Monetary System is a hybrid of currency, check, card payment systems, and electronic finds transfer systems, possessing many of the benefits of these systems with few of their limitations. The system utilizes electronic representations of money which are designed to be universally accepted and exchanged as economic value by subscribers of the monetary system.

Today, approximately 350 billion coin and currency transactions occur between individuals and institutions every year. The extensive use of coin and currency transactions has limited the automation of individual transactions such as purchases, fares, and bank account deposits and withdrawals. Individual cash transactions are burdened by the need to have the correct amount of cash or providing change therefor. Furthermore, the handling and managing of paper cash and coins is inconvenient, costly and time consuming for both individuals and financial institutions.

Although checks may be written for any specific amount up to the amount available in the account, checks have very limited transferability and must be supplied from a physical inventory. Paper-based checking systems do not offer sufficient relief from the limitations of cash transactions, sharing many of the inconveniences of handling currency while adding the inherent delays associated with processing checks. To this end, economic exchange has striven for greater convenience at a lower cost, while also seeking improved security.

Automation has achieved some of these qualities for large transactions through computerized electronic funds transfer ("EFT") systems. Electronic funds transfer is essentially a process of value exchange achieved through the banking system's centralized computer transactions. EFT services are a transfer of payments utilizing electronic "checks," which are used primarily by large commercial organizations.

The Automated Clearing House (ACH) where a user can enter a pre-authorized code and download information with billing occurring later, and a Point Of Sale (POS) system where a transaction is processed by connecting with a central computer for authorization for the transaction granted or denied immediately are examples of EFT systems that are utilized by retail and commercial organizations. However, the payments made through these types of EFT systems are limited in that they cannot be performed without the banking system. Moreover, ACH transactions usually cannot be performed during off business hours.

Home Banking bill payment services are examples of an EFT system used by individuals to make payments from a home computer. Currently, home banking initiatives have found few customers. Of the banks that have offered services for payments, account transfers and information over the telephone lines using personal computers, less than one percent of the bank's customers are using the service. One reason that Home Banking has not been a successful product is because the customer cannot deposit and withdraw money as needed in this type of system.

Current EFT systems, credit cards, or debit cards, which are used in conjunction with an on-line system to transfer money between accounts, such as between the account of a merchant and that of a customer, cannot satisfy the need for an automated transaction system providing an ergonomic interface. Examples of EFT systems which provide non-ergonomic interfaces are disclosed in US Patents Numbers 5,476,259; 5,459,304; 5,452,352; 5,448,045; 5,478,993; 5,455,407; 5,453,601; 5,465,291; and 5,485,510.

European Patent Application EP-A-0 527 639, entitled "HOME FINANCIAL TRANSACTION SYSTEM", discloses a system having a financial transaction computer system, an identification system and a financial transaction terminal. The user to scans symbolic representations of data, which correspond to the identification system, from a bill or invoice into the terminal. The data is then transmitted to the computer system for electronic payment of the bill or invoice.

To implement an automated, convenient transaction that can dispense some form of economic value, there has been a trend towards off-line payments. For example, numerous ideas have been proposed for some form of "electronic money" that can be used in cashless payment transactions as alternatives to the traditional currency and check types of payment systems. See U.S. Pat. No. 4,977,595, entitled "METHOD AND APPARATUS FOR IMPLEMENTING ELECTRONIC CASH," and U.S. Pat. No. 4,305,059, entitled "MODULAR FUNDS TRANSFER SYSTEM."

The more well known techniques include magnetic stripe cards purchased for a given amount and from which a prepaid value can be deducted for specific purposes. Upon exhaustion of the economic value, the cards are thrown away. Other examples include memory cards or so called smart cards which are capable of repetitively storing information representing value that is likewise deducted for specific purposes.

While the art pertaining to cash alternatives for transactions is a well developed one, there is a substantial need for a more user friendly sstem and method for such transactions. Thus, there is a need for a system that allows a user to interface with a display that looks and feels natural. Of particular importance is the ease of acceptance resulting from the similarity to accepted norms of payment.

### SUMMARY OF AN EXEMPLARY EMBODIMENT

In accordance with these and other objects of the invention, a brief summary of the present invention is presented. Some simplifications and omissions may be made in the following summary, which is intended to highlight and introduce some aspects of the present invention, but not to limit its scope. Detailed descriptions of a preferred, exemplary embodiment adequate to allow one of ordinary skill in the art to make and use the inventive concepts will follow in later sections.

Aspects of the invention are disclosed in independent claims 1 and 11 of the invention.

According to a broad aspect of the invention, an electronic monetary system provides for transactions utilizing a preferred embodiment in the form of an electronic-monetary system that emulates a wallet, a purse, a smart card, a pocketbook, a checkbook, a satchel or other payment instrument holder that is customarily used for storing money, credit cards and other payment instruments. Access to the wallet is restricted by a password, which can be encrypted, or used to generate an encryption key for restricting access to sensitive information, to avoid unauthorized payments. When access is authorized, a graphical representation (bitmap) of the instrument(s) is presented on the display based on either a user default, an instrument issuer default or payment instrument holder default to enable a user to select a payment instrument for use in a particular transaction. Once a payment instrument is selected, a summary of the goods for purchase are presented to the user and the user enters their electronic approval for the transaction or cancels the transaction. Electronic approval results in the generation of an electronic transaction to complete the order.

### Brief Description of the Drawings

The foregoing and other objects, aspects and advantages are better understood from the following detailed description of a preferred embodiment of the invention with reference to the drawings, in which:
Figure **1A** is a block diagram of a representative hardware environment in accordance with a preferred embodiment;
Figure **1B** is a block diagram of the system in accordance with a preferred embodiment;
Figure **2** provides an alternative preferred embodiment in accordance with a Java based implementation of the invention;
Figure **3** is an architecture block diagram in accordance with a preferred embodiment of the subject invention;
Figure **4** presents the detailed logic associated with the payment manager in accordance with a preferred embodiment;
Figure **5** is a Consumer Payment Message Sequence Diagram in accordance with a preferred embodiment of the invention;
Figure **6** is a flowchart setting forth the detailed logic of a paywindow user interface in accordance with a preferred embodiment of the invention;
Figure **7** is a flowchart of the detailed logic associated with the administration mode of the paywindow in accordance with a preferred embodiment;
Figure **8** is a flowchart of administration mode processing associated with register and report processing in accordance with a preferred embodiment;
Figure **9** is an illustration of a paywindow display in accordance with a preferred embodiment;
Figure **10** illustrates a list of payment methods for a user to select from in accordance with a preferred embodiment;
Figure **11** is an authorization display screen in accordance with a preferred embodiment;
Figure **12** is a PAID authorization display screen in accordance with a preferred embodiment;
Figure **13** is a cancellation of authorization display screen in accordance with a preferred embodiment;
Figure **14** illustrates a Main screen in accordance with a preferred embodiment of the invention;
Figure **15** is an illustration of an Administration display screen in accordance with a preferred embodiment;
Figure **16** illustrates a display of the wallet administration page in accordance with a preferred embodiment;
Figure **17** is a payment administration window in accordance with a preferred embodiment;
Figure **18** is an illustration of the administration preferences page in accordance with a preferred embodiment;
Figure **19** illustrates the window controls in accordance with a preferred embodiment;
Figure **20** is a register display in accordance with a preferred embodiment of the invention;
Figure **21** is register detail display in accordance with a preferred embodiment;
Figure **22** is a register find display in accordance with a preferred embodiment;
Figure **23** is a register customize display in accordance with a preferred embodiment;
Figure **24** is a register output display for directing the output target for register information;
Figure **25** is a report of a wallet in accordance with a preferred embodiment;
Figure **26** illustrates a report customize display in accordance with a preferred embodiment; and
Figure **27** is a report output display in accordance with a preferred embodiment;
Figure **28** illustrates a set of images illustrating "open" and "closed" icons for payment holders in accordance with a preferred embodiment;
Figure **29** is an illustration of a certificate issuance form in accordance with a preferred embodiment;
Figure **30** illustrates a certificate issuance response in accordance with a preferred embodiment;
Figure **31** illustrates a collection of payment instrument holders in accordance with a preferred embodiment;
Figure **32** illustrates the default payment instrument bitmap in accordance with a preferred embodiment;
Figure **33** illustrates a selected payment instrument with a fill in the blanks for the cardholder in accordance with a preferred embodiment; and
Figure **34** illustrates a coffee purchase utilizing the newly defined VISA card in accordance with a preferred embodiment of the invention.

### Detailed Description

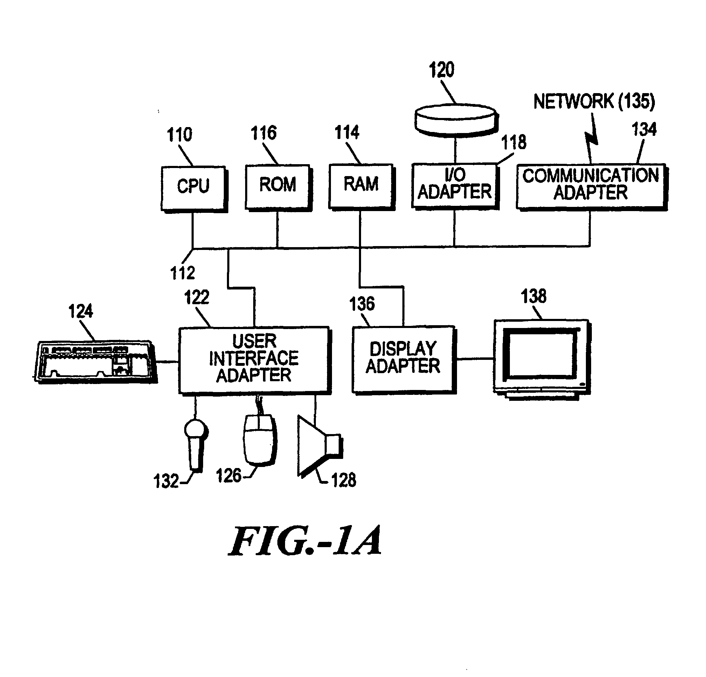

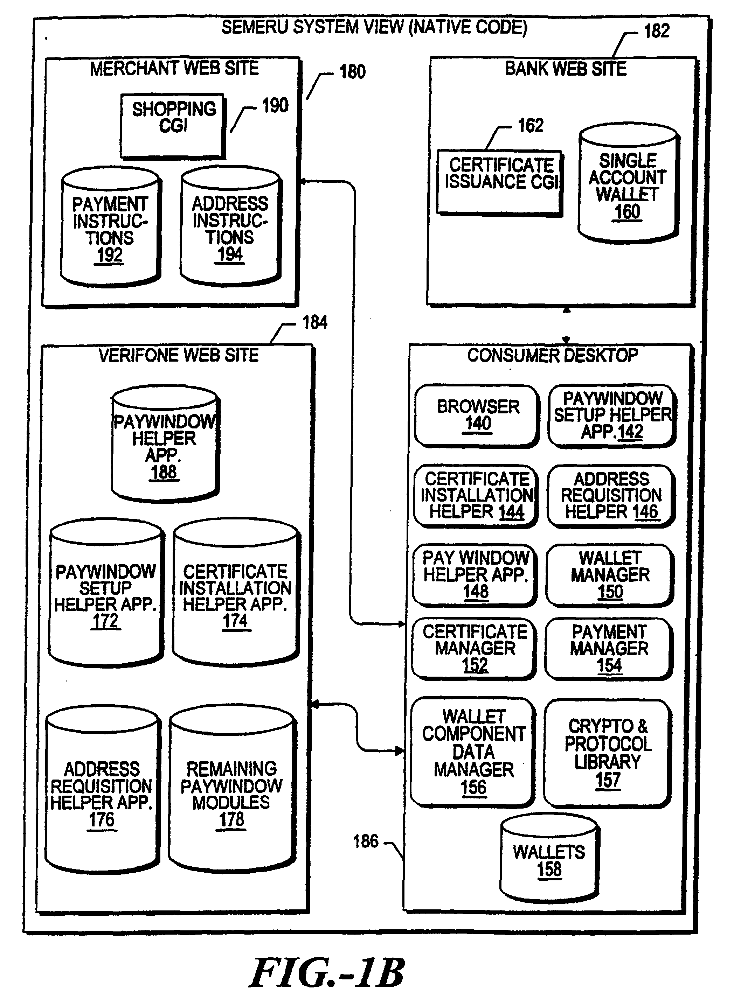

A preferred embodiment of a system in accordance with the present invention is preferably practiced in the context of a personal computer such as the IBM PS/2, Apple Macintosh computer or UNIX based workstation. A representative hardware environment is depicted in Figure **1A,** which illustrates a typical hardware configuration of a workstation in accordance with a preferred embodiment having a central processing unit **110,** such as a microprocessor, and a number of other units interconnected via a system bus **112.** The workstation shown in Figure 1 includes a Random Access Memory (RAM) **114,** Read Only Memory (ROM) **116**, an I/O adapter **118** for connecting peripheral devices such as disk storage units **120** to the bus **112,** a user interface adapter **122** for connecting a keyboard **124,** a mouse **126**, a speaker **128**, a microphone **132**, and/or other user interface devices such as a touch screen (not shown) to the bus **112,** communication adapter **134** for connecting the workstation to a communication network (e.g., a data processing network) and a display adapter **136** for connecting the bus **112** to a display device **138**. The workstation typically has resident thereon an operating system such as the Microsoft Windows Operating System (OS), the IBM OS/2 operating system, the MAC OS, or UNIX operating system. Those skilled in the art will appreciate that the present invention may also be implemented on platforms and operating systems other than those mentioned.

A preferred embodiment is written using JAVA, C, and the C++ language and utilizes object oriented programming methodology. Object oriented programming (OOP) has become increasingly used to develop complex applications. As OOP moves toward the mainstream of software design and development, various software solutions will need to be adapted to make use of the benefits of OOP. A need exists for these principles of OOP to be applied to a messaging interface of an electronic messaging system such that a set of OOP classes and objects for the messaging interface can be provided.

OOP is a process of developing computer software using objects, including the steps of analyzing the problem, designing the system, and constructing the program. An object is a software package that contains both data and a collection of related structures and procedures. Since it contains both data and a collection of structures and procedures, it can be visualized as a self-sufficient component that does not require other additional structures, procedures or data to perform its specific task. OOP, therefore, views a computer program as a collection of largely autonomous components, called objects, each of which is responsible for a specific task. This concept of packaging data, structures, and procedures together in one component or module is called encapsulation.

In general, OOP components are reusable software modules which present an interface that conforms to an object model and which are accessed at run-time through a component integration architecture.
A component integration architecture is a set of architecture mechanisms which allow software modules in different process spaces to utilize each others capabilities or functions. This is generally done by assuming a common component object model on which to build the architecture.

It is worthwhile to differentiate between an object and a class of objects at this point. An object is a single instance of the class of objects, which is often just called a class. A class of objects can be viewed as a blueprint, from which many objects can be formed.

OOP allows the programmer to create an object that is a part of another object For example, the object representing a piston engine is said to have a composition-relationship with the object representing a piston. In reality, a piston engine comprises a piston, valves and many other components; the fact that a piston is an element of a piston engine can be logically and semantically represented in OOP by two objects.

OOP also allows creation of an object that "depends from" another object. If there are two objects, one representing a piston engine and the other representing a piston engine wherein the piston is made of ceramic, then the relationship between the two objects is not that of composition. A ceramic piston engine does not make up a piston engine. Rather it is merely one kind of piston engine that has one more limitation than the piston engine; its piston is made of ceramic. In this case, the object representing the ceramic piston engine is called a derived object, and it inherits all of the aspects of the object representing the piston engine and adds further limitation or detail to it. The object representing the ceramic piston engine "depends from" the object representing the piston engine. The relationship between these objects is called inheritance.

When the object or class representing the ceramic piston engine inherits all of the aspects of the objects representing the piston engine, it inherits the thermal characteristics of a standard piston defined in the piston engine class. However, the ceramic piston engine object overrides these ceramic specific thermal characteristics, which are typically different from those associated with a metal piston. It skips over the original and uses new functions related to ceramic pistons. Different kinds of piston engines will have different characteristics, but may have the same underlying functions associates with it (e.g., how many pistons in the engine, ignition sequences, lubrication, etc.). To access each of these functions in any piston engine object, a programmer would call the same functions with the same names, but each type of piston engine may have different/overriding implementations of functions behind the same name. This ability to hide different implementations of a function behind the same name is called polymorphism and it greatly simplifies communication among objects.

With the concepts of composition-relationship, encapsulation, inheritance and polymorphism, an object can represent just about anything in the real world. In fact, our logical perception of the reality is the only limit on determining the kinds of things that can become objects in object-oriented software. Some typical categories are as follows:
- Objects can represent physical objects, such as automobiles in a traffic-flow simulation, electrical components in a circuit-design program, countries in an economics model, or aircraft in an air-traffic-control system.
- Objects can represent elements of the computer-user environment such as windows, menus or graphics objects.
- An object can represent an inventory, such as a personnel file or a table of the latitudes and longitudes of cities.
- An object can represent user-defined data types such as time, angles, and complex numbers, or points on the plane.

With this enormous capability of an object to represent just about any logically separable matters, OOP allows the software developer to design and implement a computer program that is a model of some aspects of reality, whether that reality is a physical entity, a process, a system, or a composition of matter. Since the object can represent anything, the software developer can create an object which can be used as a component in a larger software project in the future.

If 90% of a new OOP software program consists of proven, existing components made from preexisting reusable objects, then only the remaining 10% of the new software project has to be written and tested from scratch. Since 90% already came from an inventory of extensively tested reusable objects, the potential domain from which an error could originate is 10% of the program. As a result, OOP enables software developers to build objects out of other, previously built, objects.

This process closely resembles complex machinery being built out of assemblies and sub-assemblies. OOP technology, therefore, makes software engineering more like hardware engineering in that software is built from existing components, which are available to the developer as objects. All this adds up to an improved quality of the software as well as an increased speed of its development.

Programming languages are beginning to fully support the OOP principles, such as encapsulation, inheritance, polymorphism, and composition-relationship. With the advent of the C++ language, many commercial software developers have embraced OOP. C++ is an OOP language that offers a fast, machine-executable code. Furthermore, C++ is suitable for both commercial-application and systems-programming projects. For now, C++ appears to be the most popular choice among many OOP programmers, but there is a host of other OOP languages, such as Smalltalk, common lisp object system (CLOS), and Eiffel. Additionally, OOP capabilities are being added to more traditional popular computer programming languages such as Pascal.

The benefits of object classes can be summarized, as follows:
- *Objects* and their corresponding classes break down complex programming problems into many smaller, simpler problems.
- *Encapsulation* enforces data abstraction through the organization of data into small, independent objects that can communicate with each other. Encapsulation protects the data in an object from accidental damage, but allows other objects to interact with that data by calling the object's member functions and structures.
- *Subclassing* and inheritance make it possible to extend and modify objects through deriving new kinds of objects from the standard classes available in the system. Thus, new capabilities are created without having to start from scratch.
- *Polymorphism* and multiple inheritance make it possible for different programmers to mix and match characteristics of many different classes and create specialized objects that can still work with related objects in predictable ways.
- *Class hierarchies* and containment hierarchies provide a flexible mechanism for modeling real-world objects and the relationships among them.
- *Libraries* of reusable classes are useful in many situations, but they also have some limitations. For example:

- *Complexity*. In a complex system, the class hierarchies for related classes can become extremely confusing, with many dozens or even hundreds of classes.
- *Flow of control*. A program written with the aid of class libraries is still responsible for the flow of control (i.e., it must control the interactions among all the objects created from a particular library). The programmer has to decide which functions to call at what times for which kinds of objects.
- *Duplication of effort*. Although class libraries allow programmers to use and reuse many small pieces of code, each programmer puts those pieces together in a different way. Two different programmers can use the same set of class libraries to write two programs that do exactly the same thing but whose internal structure (i.e., design) may be quite different, depending on hundreds of small decisions each programmer makes along the way. Inevitably, similar pieces of code end up doing similar things in slightly different ways and do not work as well together as they should.

Class libraries are very flexible. As programs grow more complex, more programmers are forced to reinvent basic solutions to basic problems over and over again. A relatively new extension of the class library concept is to have a framework of class libraries. This framework is more complex and consists of significant collections of collaborating classes that capture both the small scale patterns and major mechanisms that implement the common requirements and design in a specific application domain. They were first developed to free application programmers from the chores involved in displaying menus, windows, dialog boxes, and other standard user interface elements for personal computers.

Frameworks also represent a change in the way programmers think about the interaction between the code they write and code written by others. In the early days of procedural programming, the programmer called libraries provided by the operating system to perform certain tasks, but basically the program executed down the page from start to finish, and the programmer was solely responsible for the flow of control. This was appropriate for printing out paychecks, calculating a mathematical table, or solving other problems with a program that executed in just one way.

The development of graphical user interfaces began to turn this procedural programming arrangement inside out. These interfaces allow the user, rather than program logic, to drive the program and decide when certain actions should be performed. Today, most personal computer software accomplishes this by means of an event loop which monitors the mouse, keyboard, and other sources of external events and calls the appropriate parts of the programmer's code according to actions that the user performs. The programmer no longer determines the order in which events occur. Instead, a program is divided into separate pieces that are called at unpredictable times and in an unpredictable order. By relinquishing control in this way to users, the developer creates a program that is much easier to use. Nevertheless, individual pieces of the program written by the developer still call libraries provided by the operating system to accomplish certain tasks, and the programmer must still determine the flow of control within each piece after it's called by the event loop. Application code still "sits on top of" the system.

Even event loop programs require programmers to write a lot of code that should not need to be written separately for every application. The concept of an application framework carries the event loop concept further. Instead of dealing with all the nuts and bolts of constructing basic menus, windows, and dialog boxes and then making these things all work together, programmers using application frameworks start with working application code and basic user interface elements in place. Subsequently, they build from there by replacing some of the generic capabilities of the framework with the specific capabilities of the intended application.

Application frameworks reduce the total amount of code that a programmer has to write from scratch. However, because the framework is really a generic application that displays windows, supports copy and paste, and so on, the programmer can also relinquish control to a greater degree than event loop programs permit. The framework code takes care of almost all event handling and flow of control, and the programmer's code is called only when the framework needs it (e.g., to create or manipulate a proprietary data structure).

A programmer writing a framework program not only relinquishes control to the user (as is also true for event loop programs), but also relinquishes the detailed flow of control within the program to the framework. This approach allows the creation of more complex systems that work together in interesting ways, as opposed to isolated programs, having custom code, being created over and over again for similar problems.

Thus, as is explained above, a framework basically is a collection of cooperating classes that make up a reusable design solution for a given problem domain. It typically includes objects that provide default behavior (e.g., for menus and windows), and programmers use it by inheriting some of that default behavior and overriding other behavior so that the framework calls application code at the appropriate times.
There are three main differences between frameworks and class libraries:
- *Behavior versus protocol.* Class libraries are essentially collections of behaviors that you can call when you want those individual behaviors in your program. A framework, on the other hand, provides not only behavior but also the protocol or set of rules that govern the ways in which behaviors can be combined, including rules for what a programmer is supposed to provide versus what the framework provides.
- *Call versus override*. With a class library, the code the programmer instantiates objects and calls their member functions.
   It's possible to instantiate and call objects in the same way with a framework (i.e., to treat the framework as a class library), but to take full advantage of a framework's reusable design, a programmer typically writes code that overrides and is called by the framework. The framework manages the flow of control among its objects. Writing a program involves dividing responsibilities among the various pieces of software that are called by the framework rather than specifying how the different pieces should work together.
- *Implementation versus design*. With class libraries, programmers reuse only implementations, whereas with frameworks, they reuse design. A framework embodies the way a family of related programs or pieces of software work. It represents a generic design solution that can be adapted to a variety of specific problems in a given domain. For example, a single framework can embody the way a user interface works, even though two different user interfaces created with the same framework might solve quite different interface problems.

Thus, through the development of frameworks for solutions to various problems and programming tasks, significant reductions in the design and development effort for software can be achieved.
A preferred embodiment of the invention utilizes HyperText Markup Language (HTML) to implement documents on the Internet. HTML is a simple data format used to create hypertext documents that are portable from one platform to another. HTML documents are SGML documents with generic semantics that are appropriate for representing information from a wide range of domains. HTML has been in use by the World-Wide Web global information initiative since 1990. HTML is an application of ISO Standard 8879:1986 Information Processing Text and Office Systems; Standard Generalized Markup Language (SGML).

To date, Web development tools have been limited in their ability to create dynamic Web applications which span from client to server and interoperate with existing computing resources. Until recently, HTML has been the dominant technology used in development of Web-based solutions. However, HTML has proven to be inadequate in the following areas:
o Poor performance;
o Restricted user interface capabilities;
o Can only produce static Web pages;
o Lack of interoperability with existing applications and data; and
o Inability to scale.

Sun Microsystem's Java language solves many of the client-side problems by:
o Improving performance on the client side;
o Enabling the creation of dynamic, real-time Web applications; and
o Providing the ability to create a wide variety of user interface components.

With Java, developers can create robust User Interface (UI) components. Custom "widgets" (e.g. real-time stock tickers, animated icons, etc.) can be created, and client-side performance is improved. Unlike HTML, Java supports the notion of client-side validation, offloading appropriate processing onto the client for improved performance. Dynamic, real-time Web pages can be created. Using the above-mentioned custom UI components, dynamic Web pages can also be created.

Sun's Java language has emerged as an industry-recognized language for "programming the Internet." Sun defines Java as: "a simple, object-oriented, distributed, interpreted, robust, secure, architecture-neutral, portable, high-performance, multithreaded, dynamic, buzzword-compliant, general-purpose programming language. Java supports programming for the Internet in the form of platform-independent Java applets." Java applets are small, specialized applications that comply with Sun's Java Application Programming Interface (API) allowing developers to add "interactive content" to Web documents (e.g. simple animations, page adornments, basic games, etc.). Applets execute within a Java-compatible browser (e.g. Netscape Navigator) by copying code from the server to client. From a language standpoint, Java's core feature set is based on C++. Sun's Java literature states that Java is basically "C++, with extensions from Objective C for more dynamic method resolution".

Another technology that provides similar function to JAVA is provided by Microsoft and ActiveX Technologies, to give developers and Web designers wherewithal to build dynamic content for the Internet and personal computers. ActiveX includes tools for developing animation, 3-D virtual reality, video and other multimedia content. The tools use Internet standards, work on multiple platforms, and are being supported by over 100 companies. The group's building blocks are called ActiveX Controls, small, fast components that enable developers to embed parts of software in hypertext markup language (HTML) pages. ActiveX Controls work with a variety of programming languages including Microsoft Visual C++, Borland Delphi, Microsoft Visual Basic programming system and, in the future, Microsoft's development tool for Java, code named "Jakarta." ActiveX Technologies also includes ActiveX Server Framework, allowing developers to create server applications. One of ordinary skill in the art will readily recognize that ActiveX could be substituted for JAVA without undue experimentation to practice the invention.

Figure **1B** is a block diagram of a preferred embodiment of the system utilizing native code. The major components of the system are described below with reference to Figure **1B**. The mechant web site **180** contains the shopping Common Gateway Interface (CGI) **190** which is provided by the merchant or other web server communication system. The CGI is an interface which allows applications to access, process and respond to incoming messages. Industry slang is to refer to CGI scripts as a way of saying that a programmer is writing web server applications in scripting languages. A CGI script is a type of software application program. Merchants typically are setup with programs for authorization that are made up of CGI scripts. A certificate of authority will also have a web server and the handling of certificate requests will utilize CGI scripts. Consumers interact with this system to shop at the merchant site. The merchant system also accepts payment transactions originating from the consumer using the PayWindow helper application. The payment instruction **192** is a file representing the Multipurpose Internet Mail Extension (MIME) message that is created by the merchant system when the consumer elects to pay. This MIME message contains the order information and the payment instructions which are specific to the merchant. The order information contains the Goods and Services Order (GSO), shipping address, merchant Uniform Resource Locator (URL), merchant certificate, merchant name and address, and transaction ID associated with the order. The payment instructions contains the payment instruments that the merchant accepts and the payment protocol preferences.

On receiving the MIME message from the merchant system, the browser launches the PayWindow application which is defined as a helper application in the browser. The browser sends the MIME message to the PayWindow and the PayWindow interacts with the consumer to complete the payment. One of ordinary skill in the art will readily comprehend that Java, Netscape/Oracle plugins and ActiveX could readily be substituted for the MIME message underlying the architecture of this embodiment. A Java embodiment is presented below as an alternative embodiment to provide another example in accordance with another preferred embodiment.
The Address Instructions file **194** contains information representative of the MIME message that is created by the merchant system when the consumer clicks on a button on the merchant's web page for an automatic fill-in of his or her address from the wallet database. The MIME message contains the merchant's URL and the type of address that the merchant is seeking from the wallet database. The wallets contain the consumer's shipping and billing address. Once the MIME message is received from the merchant system, the browser launches the Address Requisition application **176** of the Verifone Web Site **184** which is defined as a helper application in the browser. The Address Requisition application **146, 176** interacts with the consumer to complete the address requisition request.

The Certificate Issuance at the Bank Web Site **162** resides at the bank web site **182.** It is utilized for issuing SET complaint / X.500 certificates to consumers. The implementation of this system may vary from one bank to another. However, at a high level, this system gathers consumer's personal information. After processing the information, the system issues a certificate along with a payment instrument to the consumer.

The Single Account Wallet **160** at the bank web site **182** represents the MIME message that is created by the Certificate Issuance system. This MIME message contains a VeriFone wallet. The VeriFone wallet contains a single payment instrument and the certificate associated with it. For security reasons, the private key is not included in the wallet. The customer has to specify a private key before using the instrument for payment. When the consumer is issued the certificate, this MIME message is sent to the browser. The browser launches the Certificate Installation application **174, 144** which is defined as a helper application in the browser. The Certificate Installation application **174, 144** reads the MIME message and installs the wallet into the wallet database **158**.

Various helper applications **198, 172, 174, 176** are provided to make the consumer's shopping experience easy and efficient including the following helper applications. The Paywindow helper application **188** is utilized by the consumer to authorize the payment to the merchant, to administer their wallets, to review their previously completed payment transactions and to perform housekeeping activities on the wallets. This application is defined as a 'helper' application on the consumer's desktop. The browser launches this application when the merchant system sends a MIME message requesting payment.

The PayWindow Setup Helper application **172** is used by the consumer to install helper applications and other modules from the web site onto the consumer desktop. When a consumer attempts to install an application for a first time, the consumer does not have a helper application on the desktop. Thus, the first time installation of an application requires a consumer to perform two steps. First the user must download the system package to their desktop and then the user must run setup to decompress and install the system. Thereafter, whenever the consumer gets a new release of system software, the browser launches this helper application which in turn installs the appropriate other system modules.

The Certificate Installation Helper Application **174** is utilized to install a wallet that is issued by a bank. When the bank's certificate issuance web system sends the MIME message containing the VeriFone wallet, the browser launches this application. This application queries a consumer to determine if the payment instrument contained in the wallet is to be copied to an existing wallet or to be kept in the new wallet. This application then installs the payment instrument and the certificate into the wallet database **158.**

The Address Requisition Helper Application **176** is utilized by a consumer to send his or her address from a specified wallet directly to the merchant system. When the merchant system sends the MIME message requesting the consumer's shipping and/or billing address, the browser launches this application. This application **176** queries a consumer to open a wallet if a wallet is not already open and show the requested address to the consumer. Once the consumer okays the address, the application 'posts' the requested information via an HTML form to the merchant. The HTML format of this form is standardized. Every merchant system electing to use this (Address Requisition) feature accepts this form. In addition there are other software modules that is required to run the helper applications. First time around, these modules and the helper applications is downloaded and installed by the consumer on his or her desktop. Thereafter the Setup Helper application **172** automatically installs future releases of helper applications or other software modules. Whereas an address requisition is presented as an embodiment, one of ordinary skill in the art will readily comprehend that clothing sizes, music preferences, mother's name or other information to assist a merchant can also be uploaded via similar means without departing from this embodiment.

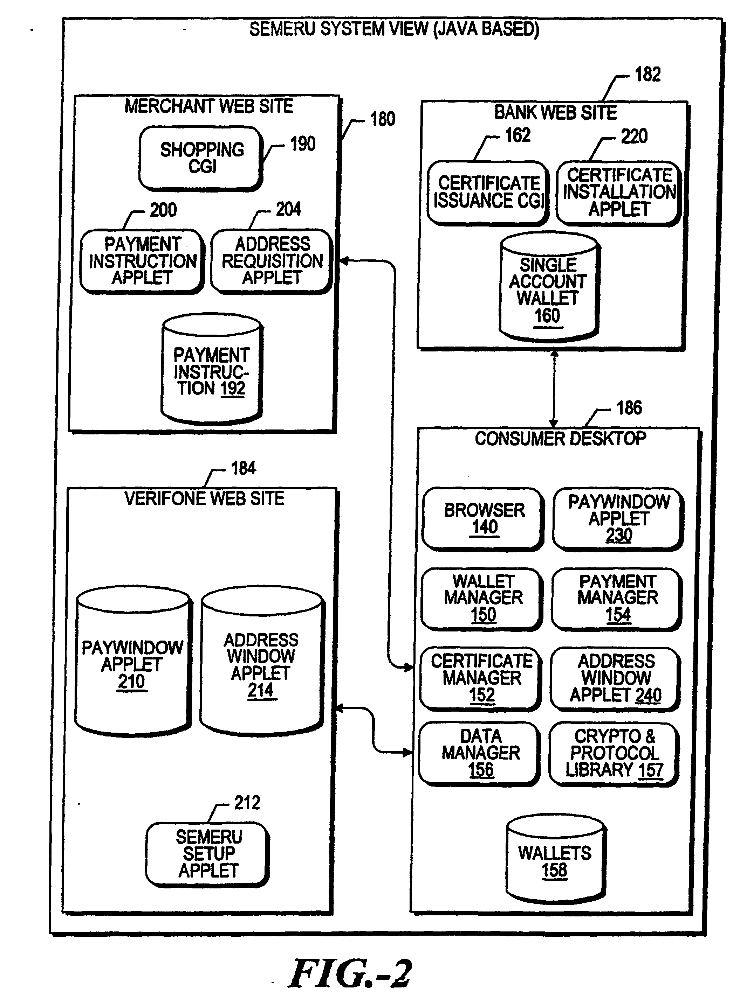

Figure **2** provides an alternative preferred embodiment in accordance with a Java based implementation of the invention. Java is a network application enabler for applications that utilize the Internet and HTML. Java is an object-oriented langugage that was developed by Sun Microsystems to speed development of their network applications.

Only the differences between the native embodiment discussed earlier and the Java version is addressed to clarify the discussion. A Payment Instruction Applet **200** at the Merchant Web Site **180** is responsible for delivering the order information to the PayWindow Applet **210, 230** on the consumer's desktop **186**. This order information has the same information that is contained in the Payment Instruction MIME message which was described in the PayWindow System View Native Code section.

The applet is a part of the payment HTML **192** page which is displayed by the merchant to the consumer. The applet requires that the following parameters be set with appropriate data when the payment page is generated by the merchant system GSO, Shipping Address, Merchant, Merchant Certificate, Merchant URL and Button Text. The applet **200** displays a button called "Pay", "Use PayWindow" or the value of the Button Text parameter. Once clicked, the applet delivers the above information to the PayWindow applet on the consumer's desktop. The consumer interacts with the PayWindow **210** Applet to complete the payment transaction.

The Address Requisition Applet **204** at the Merchant Web Site **180** is utilized by the merchant system **180** to obtain a consumer's shipping and/or billing address. This applet is displayed on the HTML page which accepts the consumer's shipping or billing address. The applet displays a button called "V-wallet" or the value of the Button Text parameter. Once clicked, the applet **204** launches the AddressWindow applet **214** utilizing the consumer's address. The AddressWindow applet **214** interacts with the consumer and sends the address information to the merchant system **180.** The address information is then processed consistent with the processing in the native system.

The Certificate Issuance CGI scripts **162** and the Single Account Wallet **160** at the Bank Web Site **182** is processed as described in the native system. The Certificate Installation Applet **220** of the Bank Web Site **182** is utilized by the Certificate Issuance CGI scripts **162** system to deliver a consumer's certificate to the consumer's desktop.

A variety of applets are provided at a web site to make the consumer's shopping experience easy and efficient. These helper applications include a Setup Applet **212,** PayWindow Applet **210** and an AddressWindow Applet **214** similar to the PayWindow Helper Application Native section discussed above.

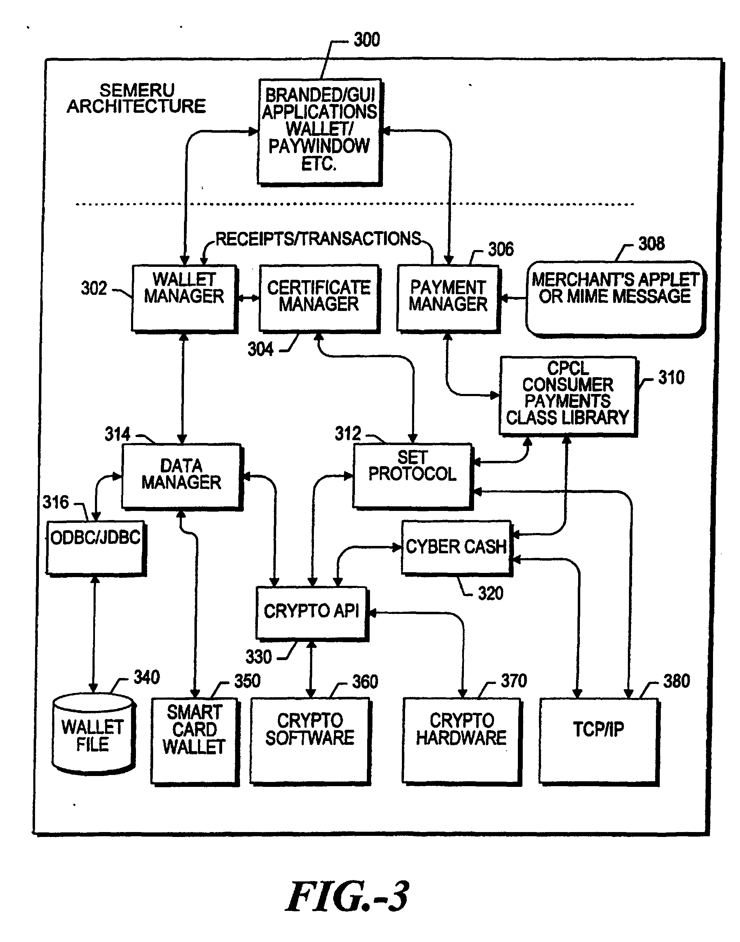

Figure **3** is an architecture block diagram in accordance with a preferred embodiment of the subject invention. Processing commences at function block **300** where the Graphical User Interface (GUI) part of the application is initialized. The GUI application **300** provides the consumer with support for ordering and making payments during the shopping process. There are also GUI components provided for wallet creation; importing, certificate and payment method creation and maintenance; and for transaction register review and reporting. The screen designs, and their associated logic, for the helper applications and applets are individually discussed in detail below.

The Certificate Manager **304** manages the automatic downloading of a consumer's certificate from a bank, validation of a consumer's and a merchant's certificates and automatic requisition of certificate renewal.

The Payment Manager **306** coordinates and completes the payment request that is received from the merchant system. The payment request is received via a MIME message in the native code implementation or via an applet in the Java implementation. The payment request received contains the final GSO, Ship-To name, merchant certificate, merchant URL, coupons and the payment amount. The manager **306** then communicates with the payment related GUI component to interact with the consumer to authorize and complete the payment transaction. The manager is also responsible for determining the payment protocol based on the consumer's payment instrument and the merchant's preferred payment protocol.

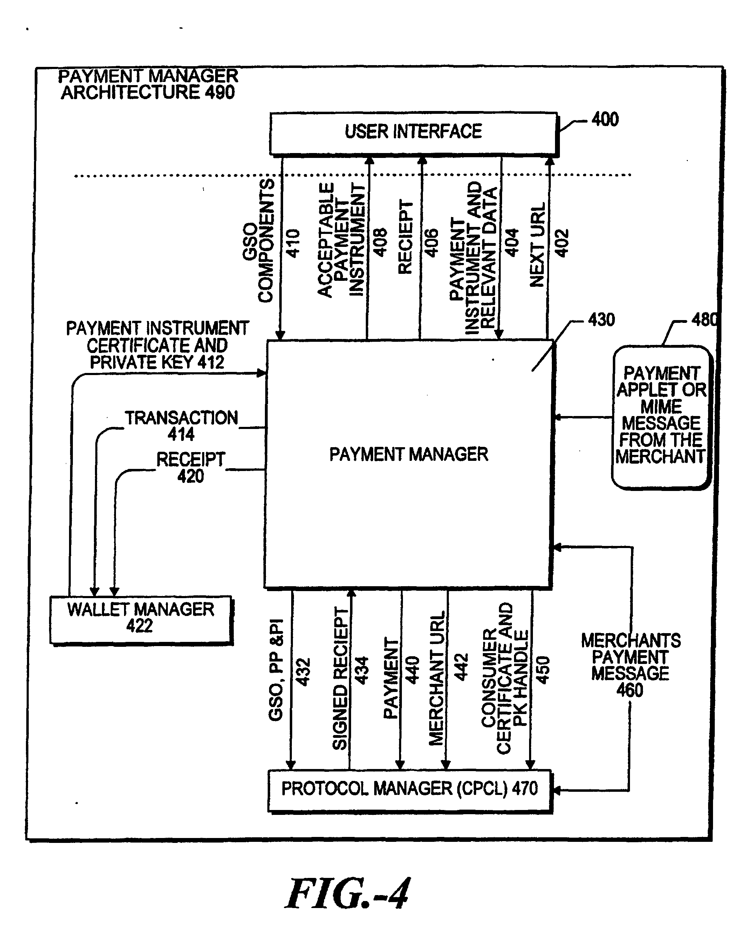

The manager **306** includes a well defined Application Programming Interface (API) which enables OEMs to interface with the payment manager **306** to make payments to specific HTTP sites. The detailed logic associated with the payment manager **306** is presented in Figure **4**.

The payment manager **306** enforces standard operations in the payment process. For example the receipt and the transaction record can automatically be transferred to the Wallet file once the payment is completed. The payment manager architecture in accordance with a preferred embodiment is presented in Figure **4**. A user interfaces with the payment manager **430** via a user interface **400** that responds to and sends a variety of transactions **410, 408, 406, 404** and **402**. The transactions include obtaining the next record, payment record, receipt, acceptance of the payment instrument and GSO components.

In turn, the payment manager **430** sends transactions **414** and receipts **420** to the wallet manager **422** and receives payment instruments, certificates and private keys from the wallet manager **422**.

The payment manager **430** also sends and receives transactions to the protocol manager **470** including a merchant's payment message **460,** a consumer certificate and PK handle **450,** a merchant URL **442,** a payment **440,** a signed receipt **434** and a GSO, Selected Payment Protocol and Selected Payment Instrument **432**. The payment manager **430** also accepts input from the payment applet or MIME message from the merchant as shown at function block **480**. One aspect of the payment processing is a Consumer Payments Class Library (CPCL) **470** which encapsulates the payment protocols into a single API. By encapsulating the payment protocols, applications are insulated from protocol variations. A SET Protocol provides an implementation of the client-side component of the Secure Electronic Transaction (SET) Protocol. A complete implementation of the client-side component of the CyberCash micro-payment protocol is also provided.

The Wallet Manager **422** provides a standard interface to the wallet. It defines the wallet database structures and the payment instrument data structures, controls the access to the wallet and provides concurrency checking if more than one application attempts to open the same wallet. The interface to the wallet manager **422** is published to allow OEMs to interface with the wallet manager and access the wallet database.
The wallet manager consists of the following sub-components:
**Wallet Access.** This component provides an interface to read and write wallet information.
**Transaction Manager.** This component provides an interface to read and write transaction corresponding to a wallet into the wallet database.
**Payment Instrument Manager.** This component manager provides a common interface to the specific payment instrument access components.
**Credit Card Access, Debit Card Access, Check Access.** These components deal with a specific payment instrument.

A Data Manager provides storage and retrieval of generic data items and database records. It is assumed that data fields, index fields or entire data records can be marked as encrypted and the encryption process is largely automated. The data manager has no specific knowledge of database records appropriate to different payment methods. This layer is separated out so as to reduce changes required when new payment methods are introduced. However RSA key pairs and certificates might be considered as "simple" data types. This component also provides an abstraction which supports wallet files on computer disk or contained in smart cards.

The Open Data Base Connectivity (ODBC)/Java Data Base Connectivity (JDBC) component provides Data Base Connectivity where formal database components are required. An embodiment of the Smart Card Wallet allows wallet data to be stored and/or secured by a cryptographic token.

A preferred embodiment includes a single file or directory of files comprising a "wallet" which contains personal information and information about multiple payment methods with the preferred implementation. These payment methods (Visa cards, debit cards, smart cards, micro-payments etc. ) also contain information such as account numbers, certificates, key pairs, expiration dates etc. The wallet is envisaged to also contain all the receipts and transaction records pertaining to every payment made using the wallet. A Cryptographic API component provides a standard interface for RSA and related cryptographic software or hardware. This support includes encryption, signature, and key generation. Choice of key exchange algorithm, symmetric encryption algorithm, and signature algorithm should all be configurable. A base class stipulates generic behavior, derived classes handle various semantic options (e.g. software based cryptography versus hardware based cryptography.)

The Cryptographic Software portion provides RSA and DES support. This may be provided utilizing the SUN, RSA or Microsoft system components depending on the implementation selected for a particular customer. Cryptographic Hardware creates a lower level API which can underpin the Cryptography API and be utilized to replace Cryptography Software with an off the shelf cryptography engine.

The message sequence charts describe the flow of messages/data between the consumer, the browser and/or the various major components of the Semeru system. The major components of the system are the Merchant system which includes the vPOS, the PayWindow, and the Payment Gateway. The merchant system allows a consumer to shop, accept the payment transactions sent by the PayWindow application, and send payment transactions to the acquiring bank. The Consumer Payments Class Library (CPCL) module is a layer within the application which sends the payment transactions, securely, from the consumer to the merchant.

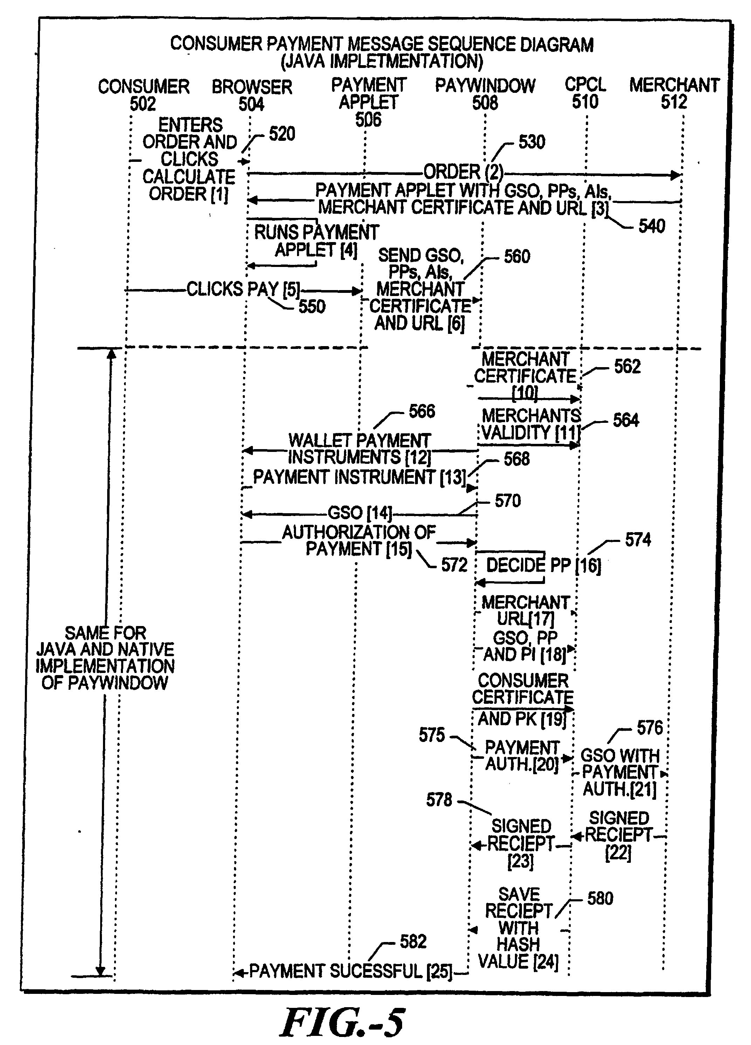

Figure 5 is a Consumer Payment Message Sequence Diagram in accordance with a preferred embodiment of the invention. The diagram presents the flow of messages between the consumer, the browser, the merchant system, the PayWindow application, and CPCL. This message flow describes the payment process from the time an order is completed and the consumer elects to pay, to the time the payment is approved and the receipt is returned to the consumer.

The difference between the Native implementation and Java implementation of the PayWindow application is in the delivery of the order information to the PayWindow. Once the order information is received by the PayWindow, the flow of messages/data is the same for both implementations. In the case of the Native implementation, the order information is delivered via a MIME message. This MIME message is sent to the PayWindow by the browser via a document file. In the Java implementation, the order information is delivered to the PayWindow by an applet. The merchant system sends an applet with the order information to the browser which in turn delivers the order to the PayWindow. Once the order is received, the PayWindow interacts with the consumer and the Protocol modules for the completion of the payment process.

### Enters Order and Clicks Calculate Order 520

This message represent the consumer order entry and the clicking of the 'Calculate Order' button. The consumer's shopping experience is all condensed into this one message flow for the purpose of highlighting the payment process. The actual implementation of the shopping process varies, however, the purpose does not, which is the creation of the order.

### Order 530

This message represents the order information which is sent by the browser to the merchant via an HTML form.

### Payment Applet with GSO, PPPs, AIs, merchant certificate and URL 540

On receipt of the order, the merchant system calculates the payment amount. This message represents the HTML page which is sent by the merchant system detailing the payment amount along with the Java payment applet which contains the GSO, PPPs, AIs, merchant certificate and URL.

### Run Payment Applet 545

The Java enabled browser runs the Payment applet. The applet displays a button called "Pay" for the consumer to click. This is embedded in the HTML page delivered by the merchant.

### Clicks Pay 550

This message represents the clicking of the Pay button on the browser by the consumer after confirming the payment amount.

### GSO, PPPs, AIs, merchant certificate and URL 560

This message represents the GSO, PPPs, AIs, merchant certificate and the merchant URL carried by the Java applet. The Java applet now delivers these to the PayWindow application.

### Merchant certificate 562

This message represents the merchant's certificate which is sent to the CPCL module for checking the validity of the merchant.

### Merchant's validity 564

The CPCL modules examines the merchant's certificate and send this message to the PayWindow indicating whether or not the merchant is a valid merchant.

### Wallet, Payment Instruments 566

This message represents the wallets and payment instruments that is displayed to the consumer. Not all payment instruments from a wallet are shown to the consumer. Only the ones accepted by the merchant is shown.

### Payment Instrument 568

This message represents the payment instrument selected by the consumer. This message is created in the current design when the user double clicks on the payment image in the "Select Payment Method" Window.

### GSO 570

This indicates that the GSO is displayed to the consumer in the "Make Payment Authorization" screen.

### Authorization of Payment 572

This message represents the authorization of the payment by the consumer. The consumer authorizes the payment by clicking the 'Accept' button on the "Payment Authorization" screen.

### Decide Payment Protocol 574

Once the consumer authorizes the payment, the payment protocol is decided by PayWindow based on the merchant's Payment Protocol Preferences and the consumer selected payment instrument.

### Payment Authorization 575

These messages represent the merchant's URL, the GSO, payment protocol (PP) to use, account number, certificate and the private key handle (PK) associated with the payment instrument which is sent to the protocol module.

### GSO with Payment Authorization 576

This message represents the payment instructions which is sent by the protocol module to the Merchant system. The GSO, PI, consumer certificate and PK is packaged based on the payment protocol.

### Signed Receipt 578

This message represents the digitally signed transaction receipt received by the protocol module from the merchant.

### Save Receipt with hash value 580

The digitally signed transaction receipt is saved by the PayWindow for future reference.

### Payment Successful 582

This indicates that the transaction receipt and the 'payment successful' have been displayed to the consumer.

### PayWindow Requirements in Accordance With a Preferred Embodiment

There are various requirements that a consumer demands of a paywindow application, such as, support for a particular target hardware platform, secure communication of payment information on the public network, easy configuration and accessibility, simplified order entry and transaction completion, store payment instrument information safely and securely, provide a wide variety of payment instruments, retain URLs of consumer's favorite shops, launch browser from the payment window to visit shops, keep records and export records for transaction data, provide shopping assistance, support multiple users with a single application, display merchant certificate and payment forms that are acceptable to a particular merchant, manage digital credentials, provide multiple accounts for a single payment type, provide support for merchant value add or loyalty programs and the support must be portable to another client machine.

A merchant has a different set of requirements for a payment application which include: consistent information format; loyalty and branding opportunities; multiple payment types for a consumer to select from; tight integration with a merchant store; links from the system to the merchant's store, better risk management / rates utilizing the system. A link could be a hypertext connetion between two displays, a point-to-point connection between areas in a single display, a Uniform Resource Locator (URL), an index, a reference to an address or other means which facilitates transfer of control from one area of execution to another area of execution (across machines, network locations or even satellite linkages and microwave transmissions).

A preferred embodiment in accordance with the invention provides a software application used by the consumer to make electronic payments. It runs on the consumer's workstation and is either a free standing application to a WWW browser or is embedded into a custom application, and is invoked whenever the consumer has completed the ordering process for a particular item and is ready to pay.

The Pay Window application in accordance with a preferred embodiment supports multiple local users. Each user's data is independently stored and secured. On program startup, a user must sign in with an ID and password. All information (on local disk or floppy) is encrypted with a password entered by the user each time the program is invoked.

### Payment Instruments

Due to the varying size of transactions and differing payment instrument usage related to social, economic and cultural factors, support is required for multiple payment instruments. Much like today, a consumer making a purchase from a merchant must have a choice of payment methods depending upon their personal preference. The supported payment instruments include: credit cards, electronic checks, electronic money, micropayment (electronic coin), debit card and smart cards.

### Secure Payment Protocol

One of the core features in accordance with a preferred embodiment is the ability to accept and make payments in a secure and reliable manner. Secure payment on the Internet becomes as safe and reliable as Point of Sale (POS) terminals today with payment solutions in accordance with another aspect of the present invention. While selection of a security protocol can be considered a technical design consideration, there is high marketing value in supplying quick time to market in the solution.

### Payment Process

The payment process is separated from the administrative function. Once a consumer has decided to make a purchase from the merchant, the application requests a user name and wallet password, displays merchant and order information, request that a user select a payment instrument from the wallet, and display and capture order acknowledgement and digital receipt. Basically for a payment instrument you can utilize any instrument that is evidence of membership, identity, certification or authority. For example, a card for video membership could be utilized to check out videos electronically via the internet.

### Transactions Supported

The application in accordance with a preferred embodiment is able to originate sales and refund transactions types. It also provides automatic fill-in of addresses based on a user preferences file, and if no information is specified when a transaction is initiated, the information from the last payment transaction is utilized as default information.

### Shopping Support (shopping companion)

The application in accordance with a preferred embodiment also shares payment and shipping information with the merchant and URLs from merchants which a consumer has frequented before linkage for visitation.

### Administrative Functions

To simplify use of the application, actual payment and administrative functions are separated. Users are not presented with administration information while trying to complete an on-line payment process. Therefore the following administrative functions are supported:

### Data Management

Data is automatically backed up to disk on a periodic basis based on user requirements. A user can view the contents of a backup in various ways. For example, a user can restore selected data from a backup, everything stored, selected user information only, or everything except payment history information. Data export is also supported for selected digital receipts or order acknowledgements for email or to print for dispute resolution with a bank or other merchant. Data export is also provided to the following financial programs: Quicken, Microsoft Money and Managing your money.

### Receipt and Transaction History Management

Receipt and transaction history management is also provided for viewing order history by time, payment instrument type, merchant and by completed, uncompleted or pending transaction. A purge order history transaction is also provided to purge the order history file by time or by payment instrument type. Another report is provided which shows digital receipts for orders placed including credit card number, expiration date, name, billing address and public key certificate. Order acknowledgements are also transmitted for every order that has been placed, and an export status tag is generated if an item has been exported to an external financial management program.

### User Administration

Various user administration transactions are also provided. They include a feature that creates an empty wallet for an user and sets a default password for the user when a new user is created. A delete user, change user password, and sign on as a user is also provided, but requires a user's password to activate. A view list of users is also provided and does not require a password to see the users defined to the system.

### Wallet administration

Wallets are user specific and require the particular user to whom the wallet belongs to be effective. A preferred embodiment provides transactions for adding a new payment instrument, deleting a payment instrument, viewing a list of payment instruments and modifying a payment instrument.

### Loyalty Programs and Coupons

Coupons are also accepted as well as other loyalty programs that a merchant might utilize, and provisions are provided for viewing loyalty program status and viewing existing coupons.

### Interoperability

A preferred embodiment of the invention interoperates with many browsers and merchant systems. The requirements for interoperability across browsers and merchants applies to a base level functionality.

### Smart Card Integration

Smartcard integration provides the consumer another payment method (stored value on a smartcard), portability of wallet information (key, payment instrument info, etc.).

### International Localization Requirements

Support for localization to a particular country is built into the product for the major countries of the world.

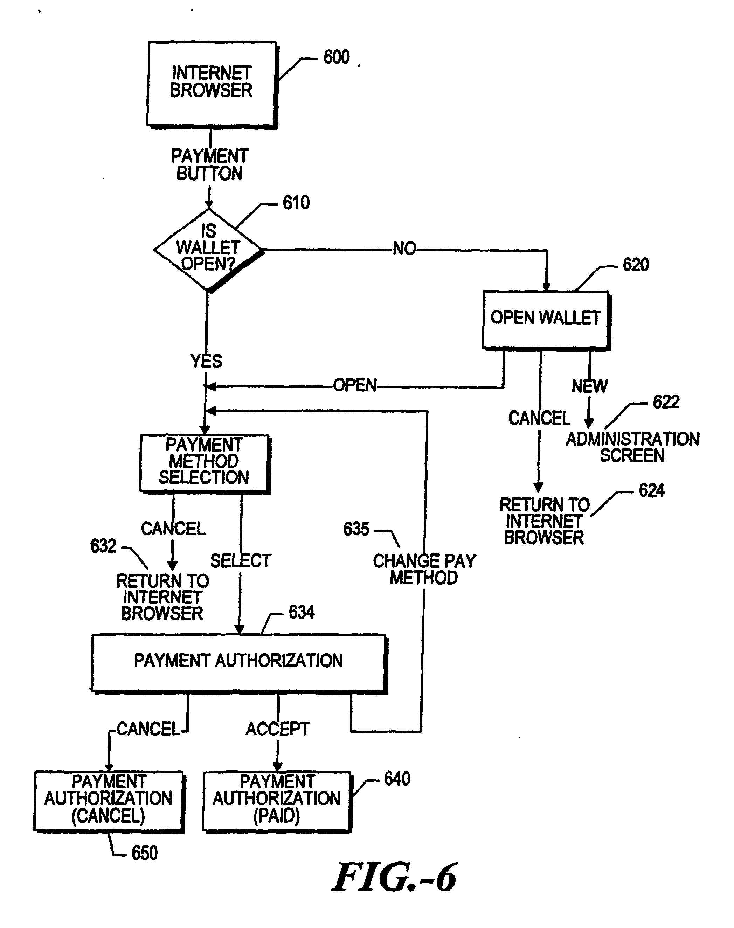

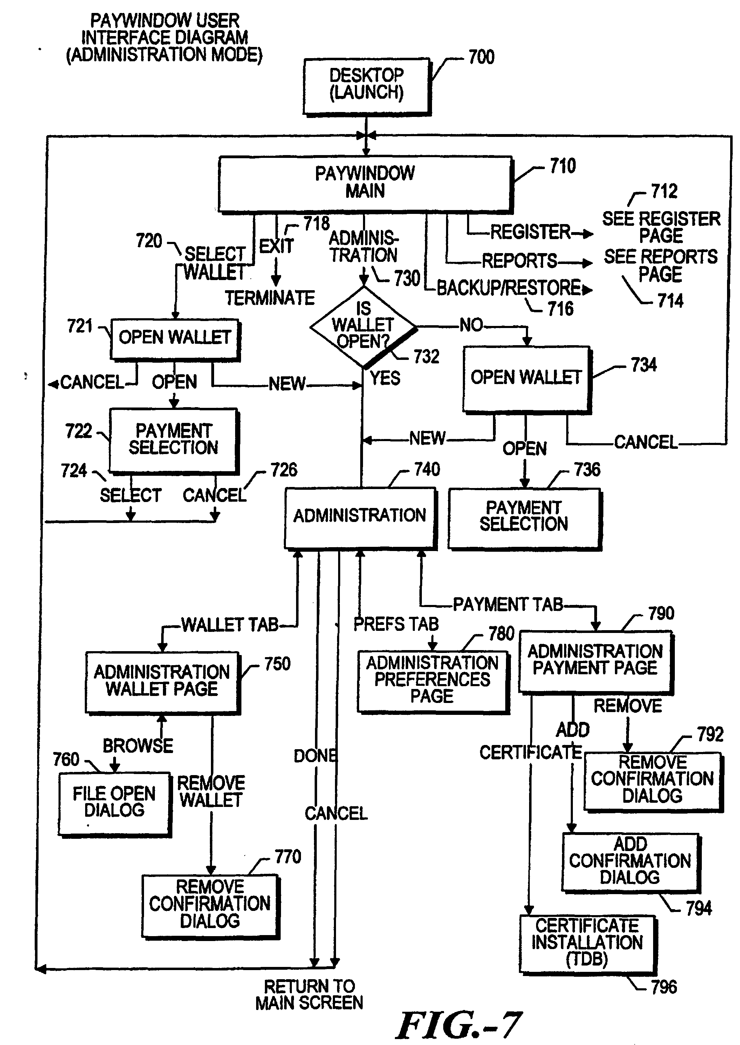

Figure 6 is a flowchart setting forth the detailed logic of a paywindow user interface in accordance with a preferred embodiment of the invention. Processing commences at function block 600 where an internet browser implemented as a Java applet detects the selection of a payment button and a test is performed at decision block 610 to determine if a wallet is open. If so, then the method of payment is determined at function block **630** and if a user cancels the processing, then control is returned to the Internet Browser at **632.** If a user selects payment authorization at function block **634,** then if the user can cancel authorization as shown at function block **650,** accept payment authorization as shown at function block **640,** or change the pay method as shown at **635** which results in a transfer of control to function block **630.** If the wallet was not open when the test was performed at decision block **610,** then the wallet is opened as shown at function block **620**, and control is passed to the Administration Screen at **622** for processing consistent with the logic presented in Figure **7**, or if the user cancels processing, then control is returned to the Internet Browser as shown at **624.**

Figure **7** is a flowchart of the detailed logic associated with the administration mode of the paywindow in accordance with a preferred embodiment. Processing commences at function block **700** when the application is desktop launched. A user is first exposed to the PayWindow **710** which has a number of selections available. If a user selects a wallet **720** then at function block **721,** the wallet is opened and control is passed to function block **722** for a particular form of payment to be selected. Once the particular form of payment is selected at **724** or payment selection is cancelled at **726**, then control is returned to the main paywindow at function block **710.** However, if a user has selected to open a new wallet at function block **721,** then control is passed to the administration function block **740** for further processing.

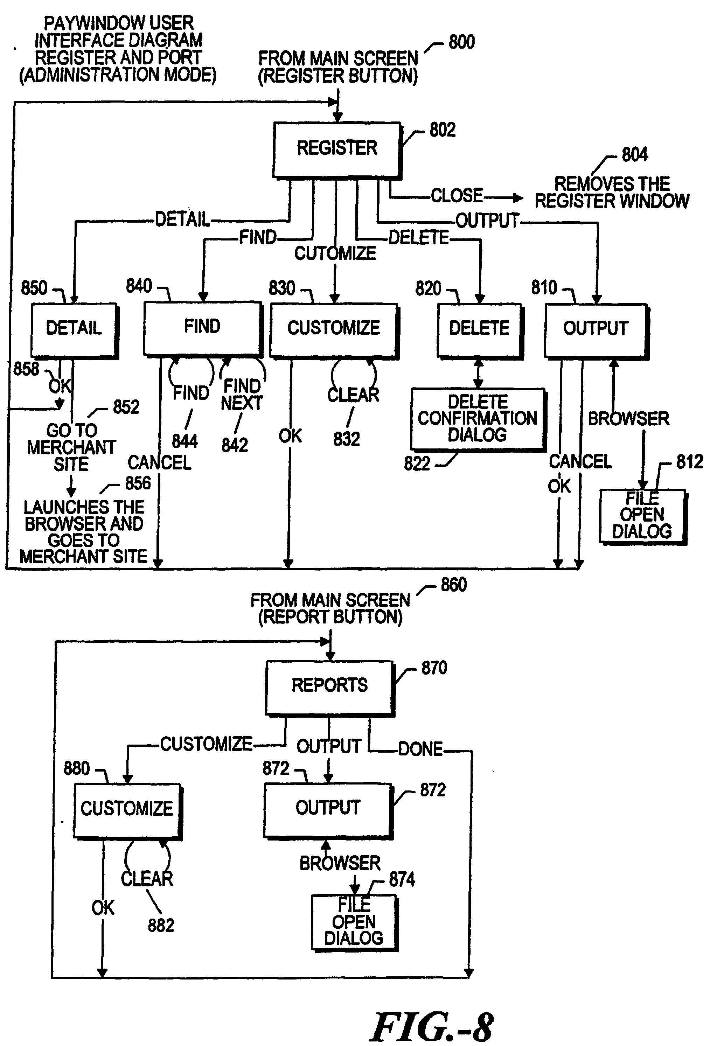

If a user selects administration mode from the main paywindow **710,** then another test is performed at decision block **732** to determine if the wallet is open. If the wallet is open, then control is passed to the administration function block **740** for further processing. If a user selects register processing **712** from the main paywindow **710,** then control is passed to the register function block detailed in Figure **8** at **800.** If a user selects reports processing, then control is passed to the reports function block **860** of Figure **8** for further processing. If a user selects backup / restore **716** then a backup or restore is performed utilizing the operating system tools in accordance with a preferred embodiment as described above.

If the wallet is determined to not be open at decision block **732,** then control is passed to function block **734** to open the wallet. After the wallet is open, then control is either passed to function block **736** to select payment, or if the user has cancelled the operation, control is passed to the main window **710** or if this is a new wallet, then control is passed to the administration function block **740**.

When control passes to the administration function block, then if the wallet tab is selected, then control passes to the administration wallet page at function block **750** and if a user is interested in browsing, then a file open dialog is initiated at function block **760**, or if a request to remove the wallet from processing is received, then a remove confirmation dialog is initiated at function block **770.** If a user is interested in changing the administration preferences, then control is passed to function block **780**. If a payment administration processing is selected, then control is passed to the administration payment page as shown in function block **790** where a certificate can be installed as shown in function block **796,** a confirmation dialog can be added at function block **794** or a remove confirmation dialog is processed at function block **792.** When administration processing is completed, control is passed back to the main paywindow at function block **710.**

Figure **8** is a flowchart of administration mode processing associated with register and report processing in accordance with a preferred embodiment. Processing commences at **800** where control is passed if an administrative register task is to be processed. The register function is parsed at function block **802** and if a detail function is to be processed, control is passed to function block **850** to determine if a hot link to a merchant site is desired. If so, then control is passed via **852** to launch a browser and go to the merchant site at **856.** If not, then control is passed via **858** back to the register function **802.** If a find function is to be processed, then control is passed to function block **840** where a find operation is performed for a particular item **844** or a find next operation is performed **842**.

When find processing is completed or cancelled **846**, control is passed back to the main register screen. If a customize register processing is desired, then control is passed to function block **830** to customize the register. If a clear operation is required, then control is passed to **832** to clear the register. When the customize operation is complete, then control is passed back to the main register processing. If a delete register operation is requested, then control is passed to function block **820** and a delete confirmation dialog is conducted at function block **822.** Finally, if an output register operation is requested, then the register window is removed at **804,** control is passed to function block **810** and a file open dialog is initiated at function block **812.** When the dialog is completed, then control is returned to function block **802**.

If a report button is pressed from the administration paywindow screen, then control is passed **860** to the reports function block **870** to customize reports at function block **880**, clear reports **882** or output reports **872** which is accomplished via a file open dialog at function block **874**.

### PayWindow

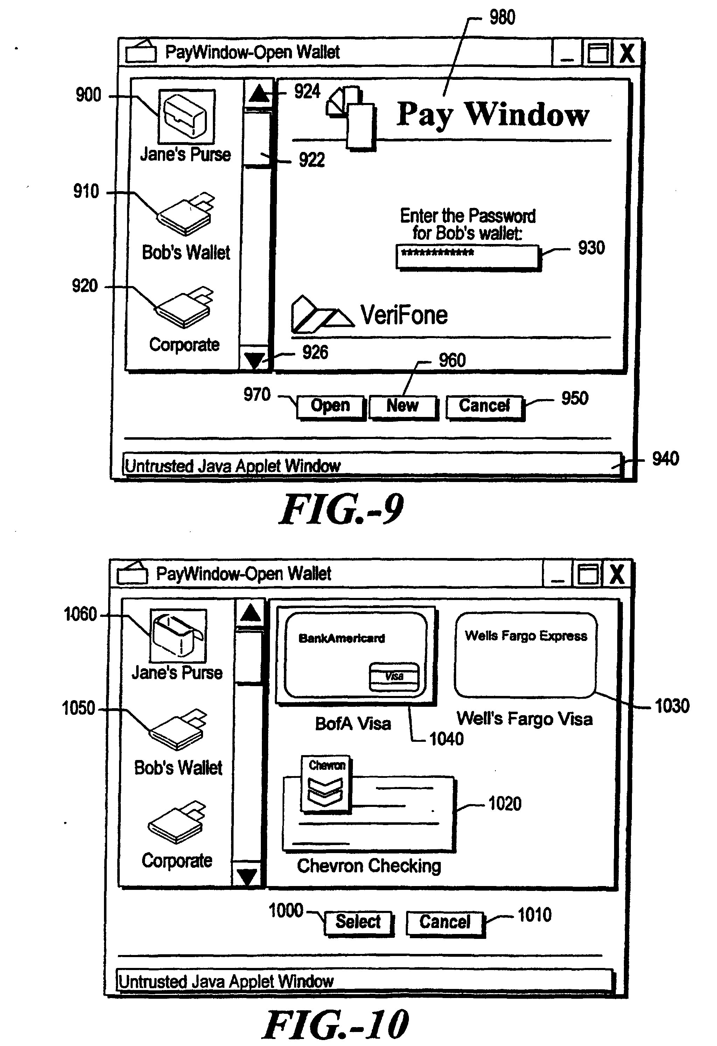

Figure **9** is an illustration of a paywindow display in accordance with a preferred embodiment. The paywindow display **980** presents a list of available payment instrument holders in graphic form such as a purse bit image **900**, or wallet bit image **910, 920** to a user once an appropriate password is entered via an entry point **930.** A scroll bar **922** is provided to allow the list of available payment methods to be scrolled, or selecting the up arrow **924** or the down arrow **926** can be used to review the available payment methods. In addition, there are areas provided at the bottom of the screen for opening **970,** creating a new **960** wallet and cancelling **950** payment. The Cancel button **950** invokes the display of the payment cancellation screen. Finally, a message area is provided at the bottom of the screen for communicating system messages **940.**

If a user presses the right or left mouse button the focus of the window is shifted accordingly. The tab key on the keyboard attached to the cpu is utilized to move and cycle the highlight between various controls on the display. If the enter key is pressed, the highlighted control is activated. For example, if the enter key is pressed after information is entered into the password field **930,** then the password is checked with the password file to determine if a valid password has been entered. The wallet's listbox is a single selection listbox which displays all the wallets installed on the system. A user may utilize the mouse or keyboard to select a wallet to open. The New button **960** creates a new wallet file and displays the 'Administration' dialog for wallet information entry.

### Payment Instrument

Figure **10** illustrates a list of payment instruments represented as bit mapped images for a user to select from in accordance with a preferred embodiment. The payment instruments include a credit card, debit card, smart card, ecash, micropayments and electronic checks. The open button **970** invokes the payment instrument screen. By clicking on the Select button **1000,** control is transferred to an authorization screen where the details of the order are displayed. The payment instruments represented in Figure **10** include a Bank Americard Visa **1040** with a graphical image that is virtually identical to the user's actual card, so such information as payment instrument holder's name, instrument name, membership period and expiration date. Such images can be obtained by scanning the user's cards or utilizing the manufacturer's template and adding text representative of the user's name. A Chevron checking account **1020** is also provided with an enlarged Chevron logo to represent the user's checking account which is another type of payment instrument that is supported in a preferred embodiment. A Wells Fargo Visa **1030** payment instrument is also provided in accordance with a preferred embodiment. Whereas realistic representations of actual visa cards are represented in Figure **10,** one of ordinary skill in the art will readily appreciate that other, user-defined graphic or text information can be utilized to represent the payment instruments. Pressing the Cancel button **1010** goes back to the Payment Cancellation screen. Choosing Bob's wallet **1050** goes back to the open wallet display screen to enter Bob's wallet password **930.** Double clicking on any payment instrument takes you to an authorization screen for that particular payment instrument. Clicking on a payment instrument icon puts a border around it, indicating it has been selected. An example of the border is shown for Jane's purse **1060** and the graphic associated with Jane's purse has an indicia of the open state which is a graphic in an open position as shown at **1060.** Similarly, if a wallet is selected, such as Bob's Wallet **1050,** the graphic associated with the wallet could be represented with an indicia of openess, such as a changed color, or a graphic that portrays an open wallet.

Source code in accordance with a preferred embodiment is provided below as another form of detailed logic disclosure. The WalletBrowserPanel class displays the wallets and the payment instruments contained in it. It utilizes the PasswordEntryPanel, ImageSelectorPanel and the Imageltem classes. The PasswordEntryPanel class accepts the password for a given wallet from the user. The ImageSelectorPanel class displays the wallet icons and the payment instrument icons and allows the user to select/deselect an wallet or instrument. Displaying of an icon on the screen is managed by the ImageItem class.

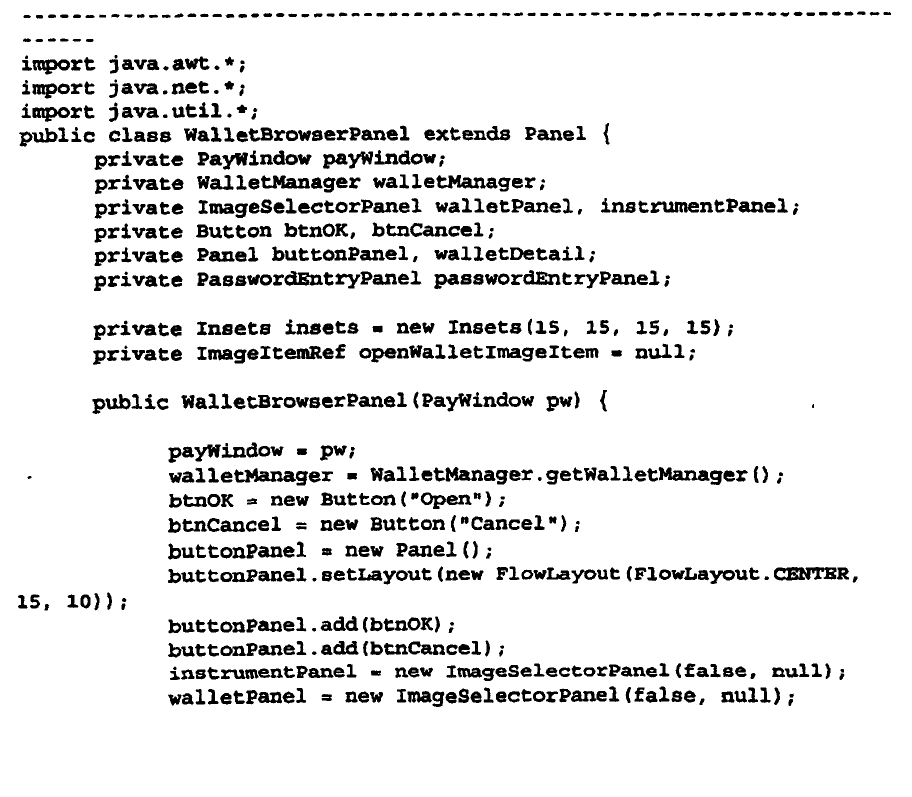

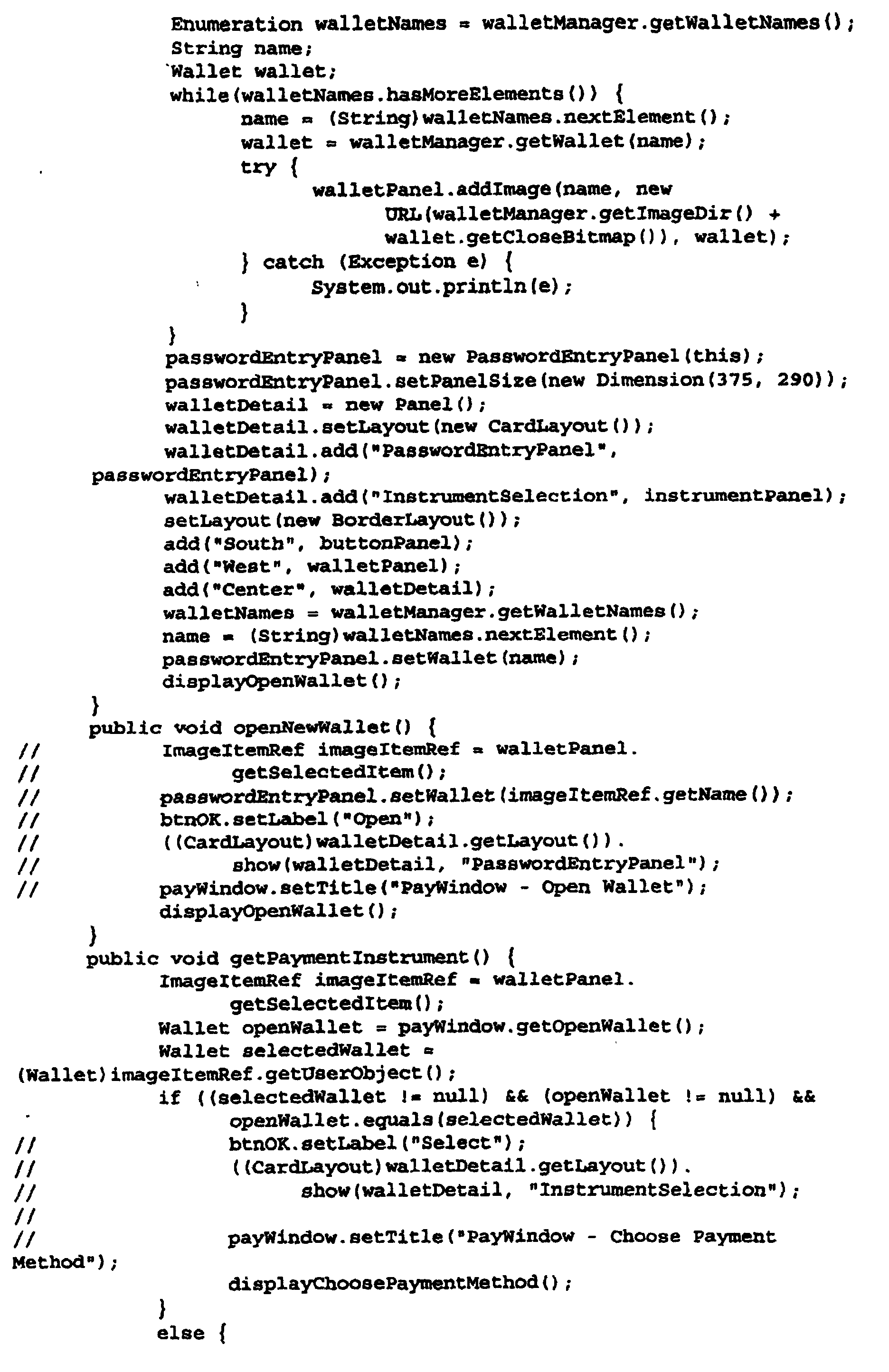

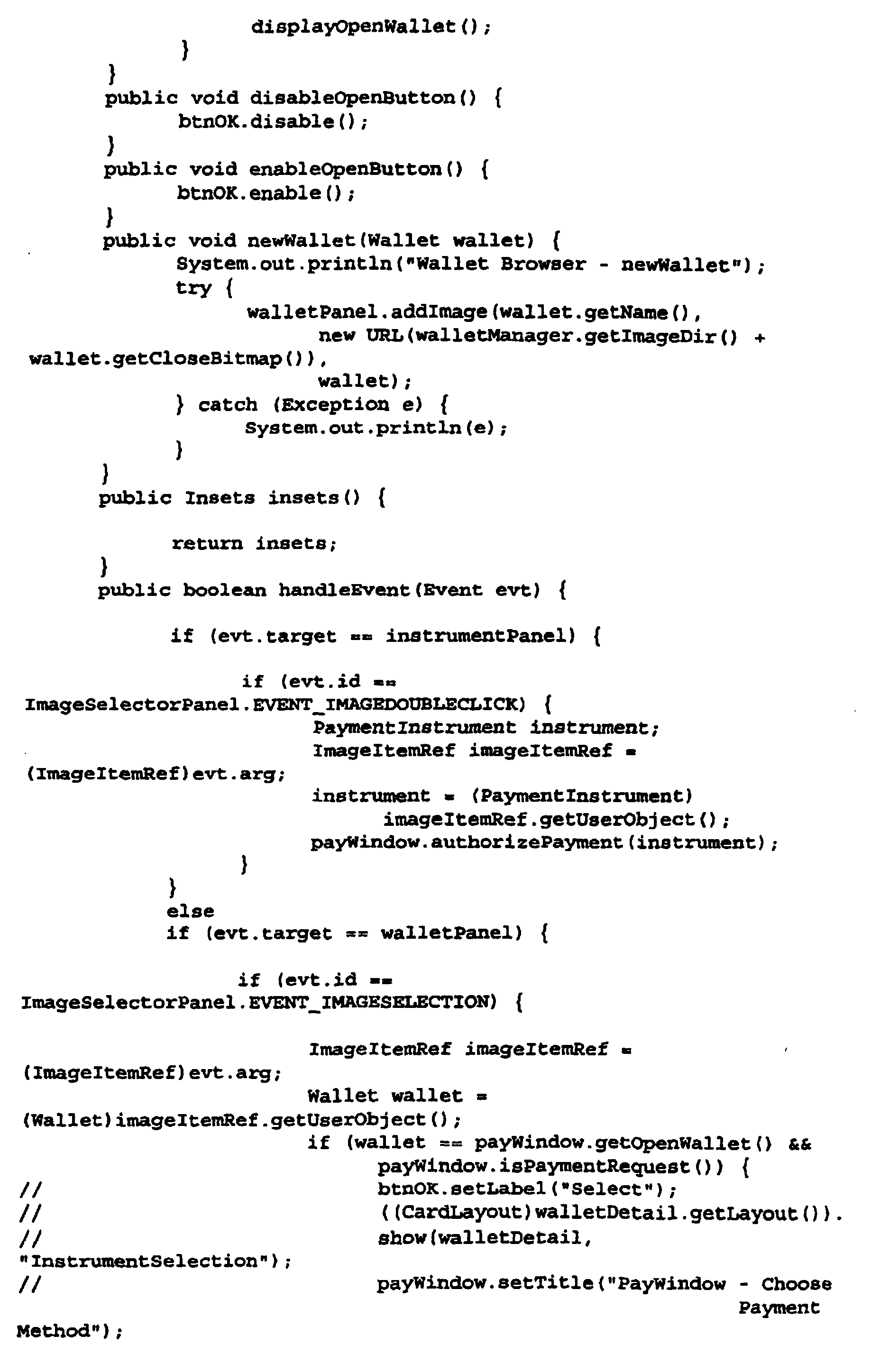

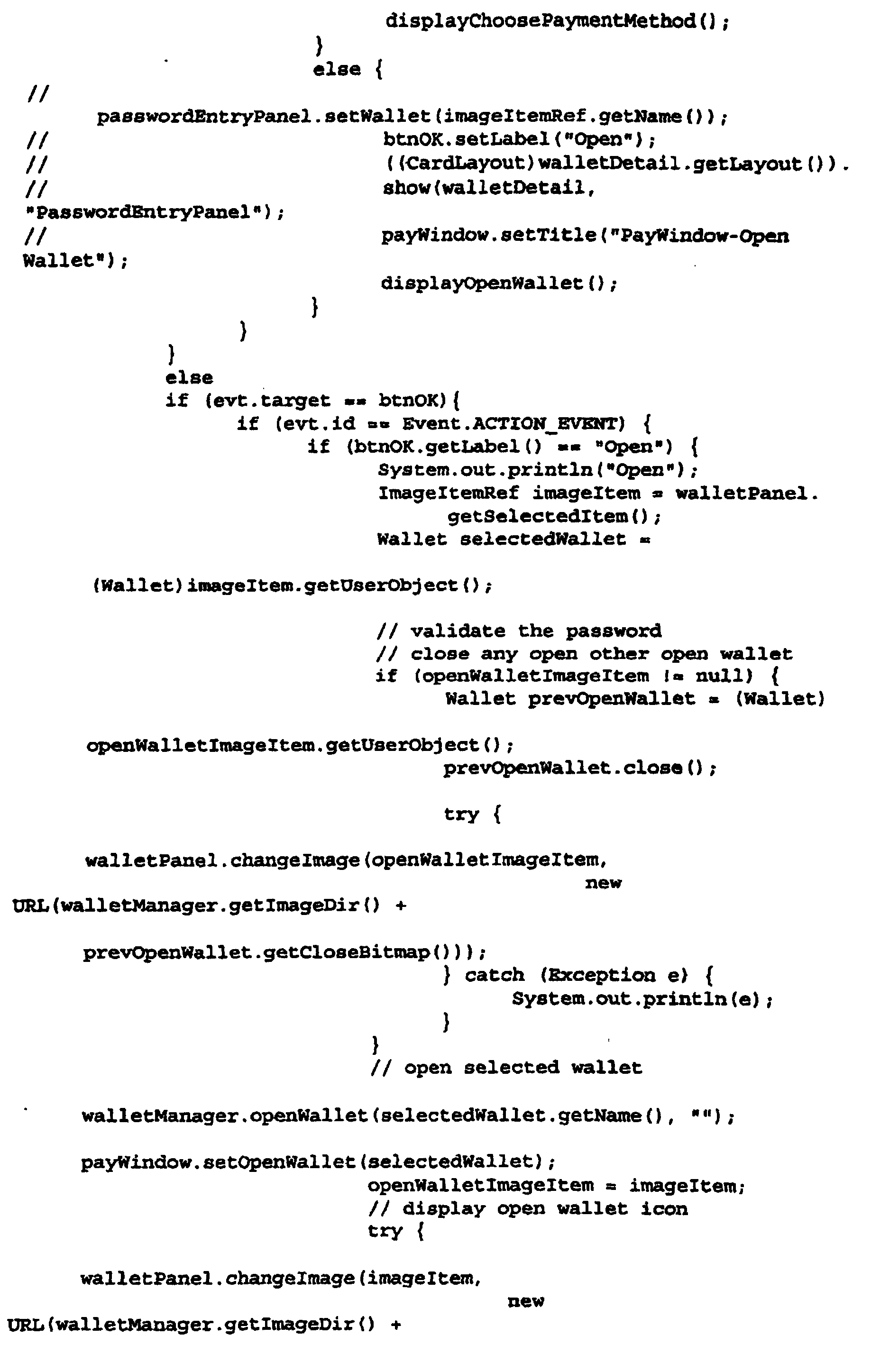

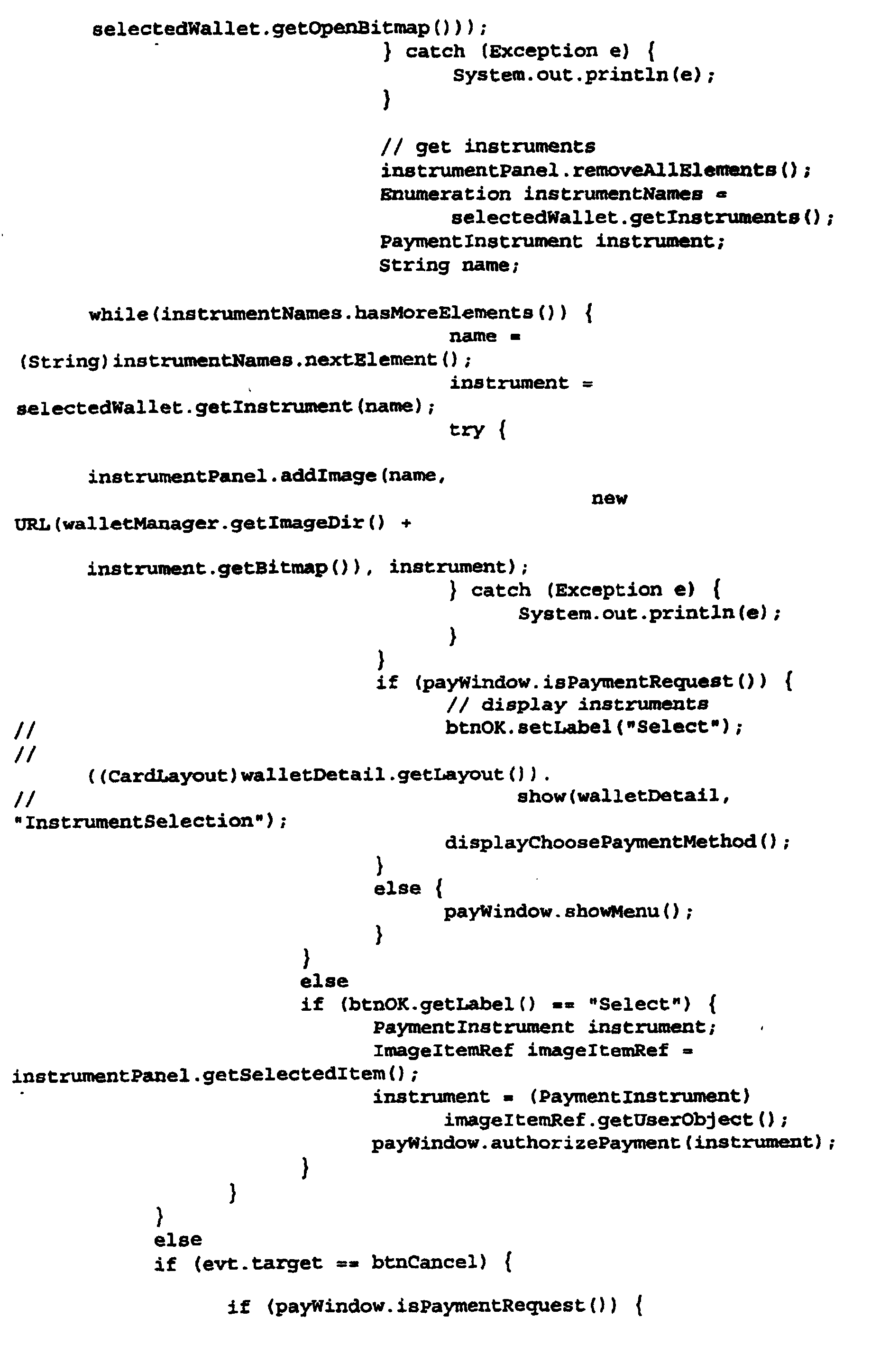

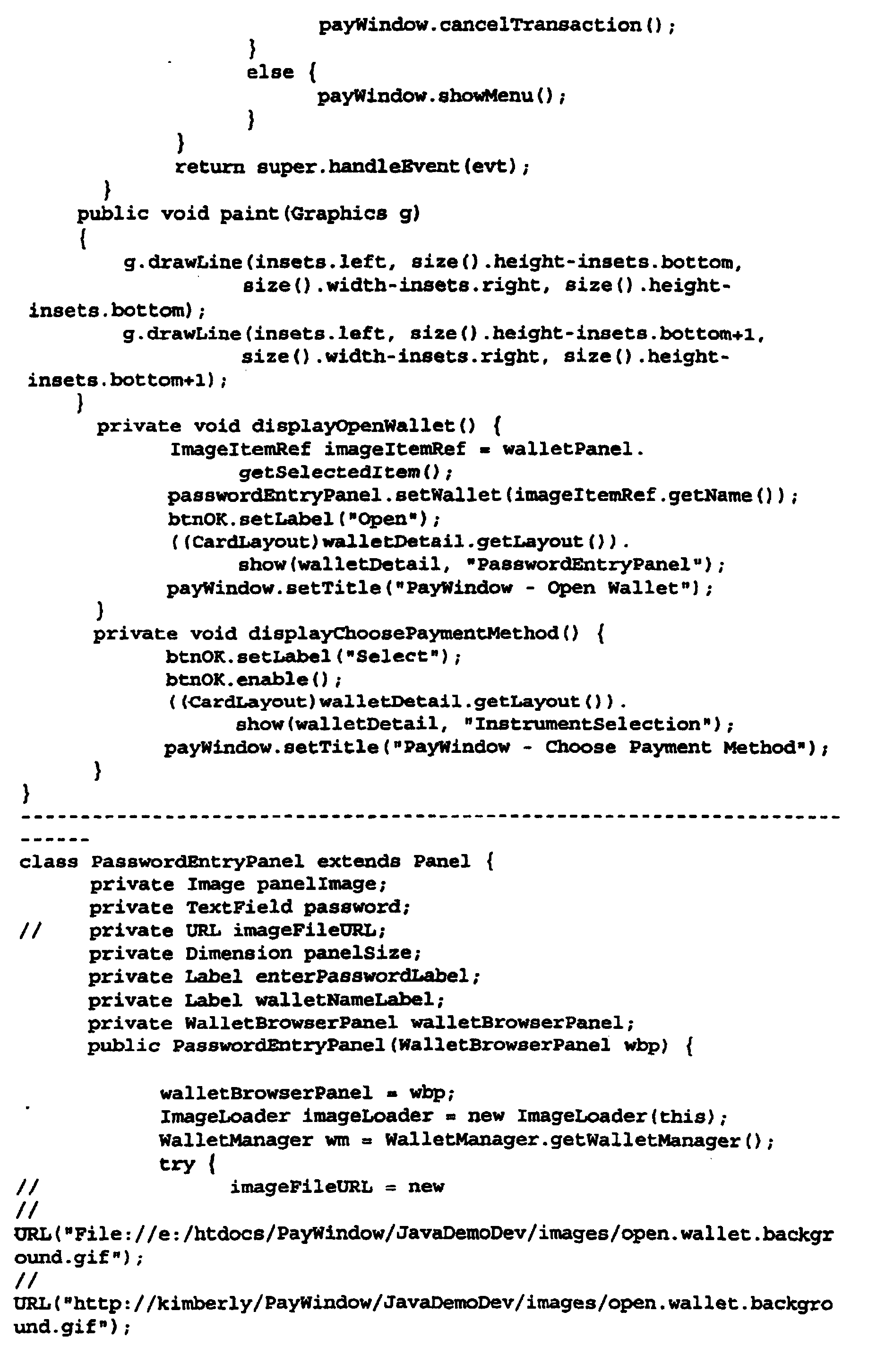

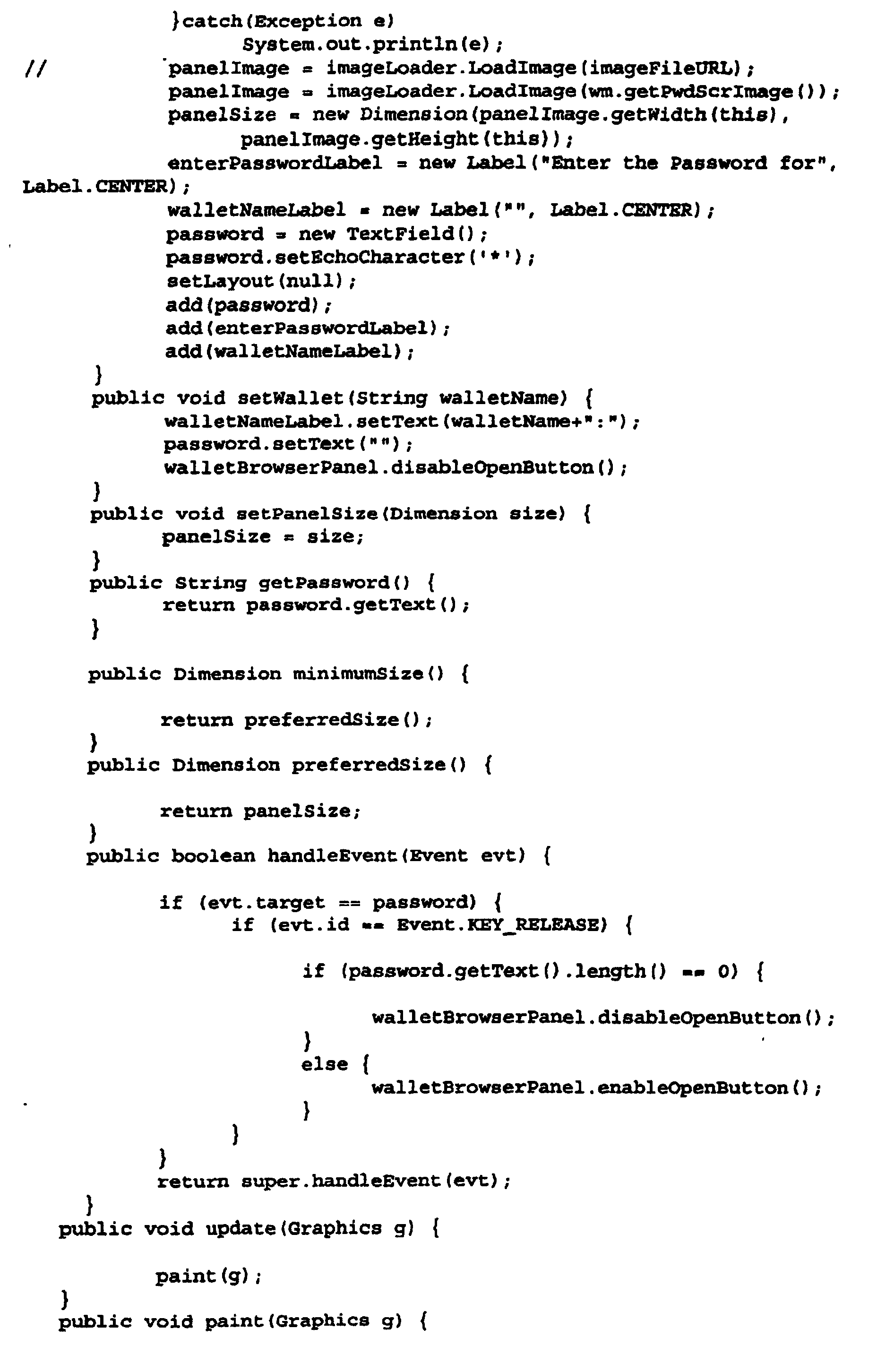

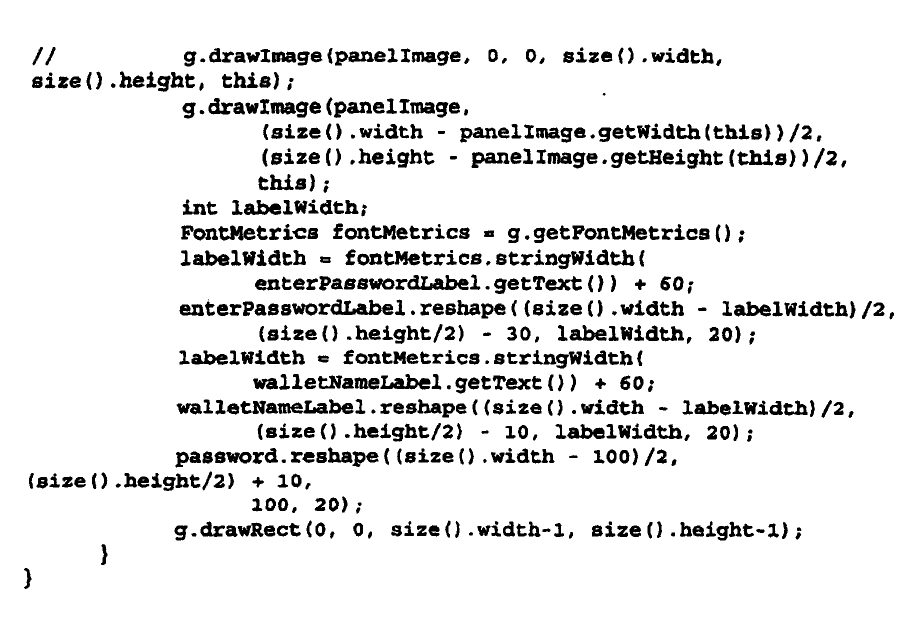

### Authorization

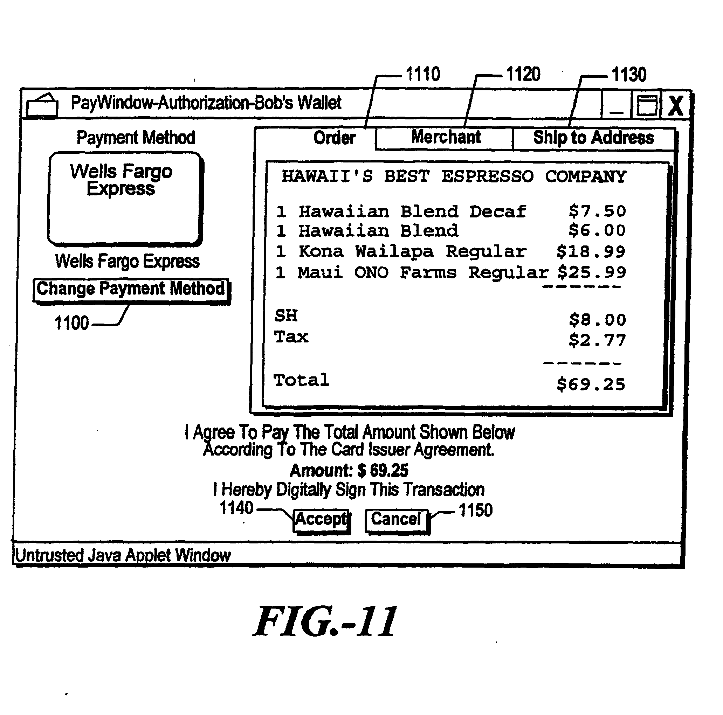

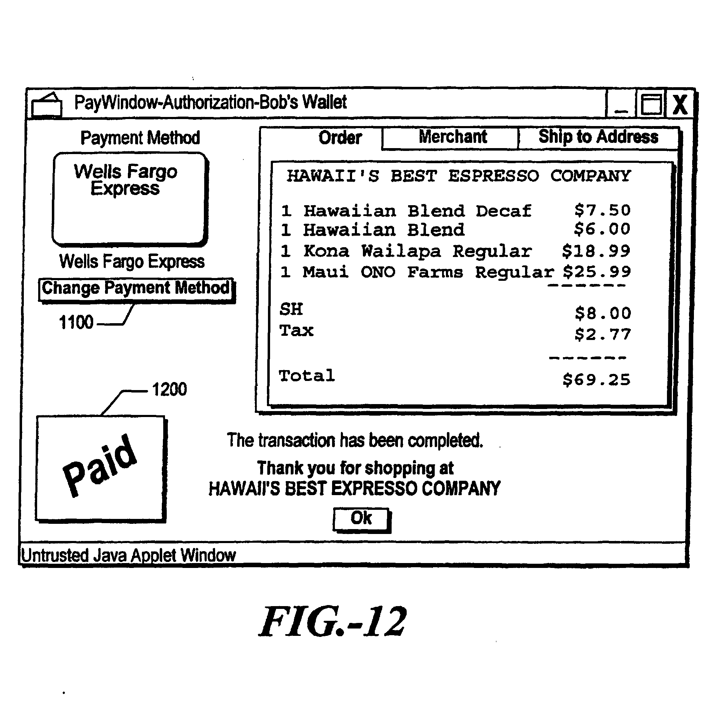

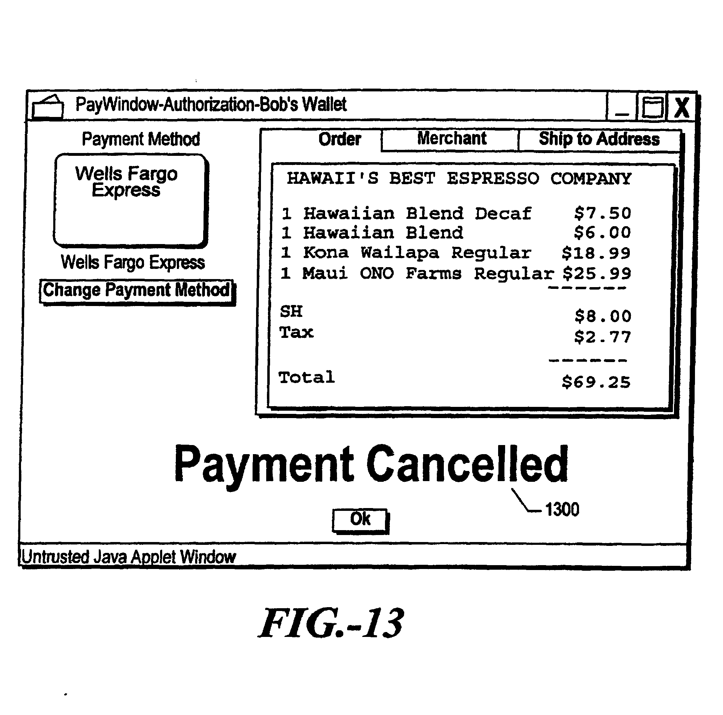

Figure **11** is an authorization display screen in accordance with a preferred embodiment. The authorization screen displays the transaction details and facilitates a user's examination of all the details of a particular transaction. It also allows a user to accept or cancel a transaction, or change the payment method for a particular transaction. The payment button on a web page launches this screen when a wallet is already open. The change payment method **1100** displays the Payment Instrument screen to allow a user to choose a different payment instrument and transfers control to the paywindow display shown in Figure **9.** The Order tab **1110** controls the display of pages of information about the transaction on order, merchant or address. Pressing the accept button **1140** signals the user's acceptance of the transaction, and it records the transaction data into the wallet's register and displays a PAID receipt as shown at **1200** at Figure **12.** Pressing the Cancel button **1150** displays the payment cancellation screen as shown in Figure **13** at **1300.**

### PayWindow Main

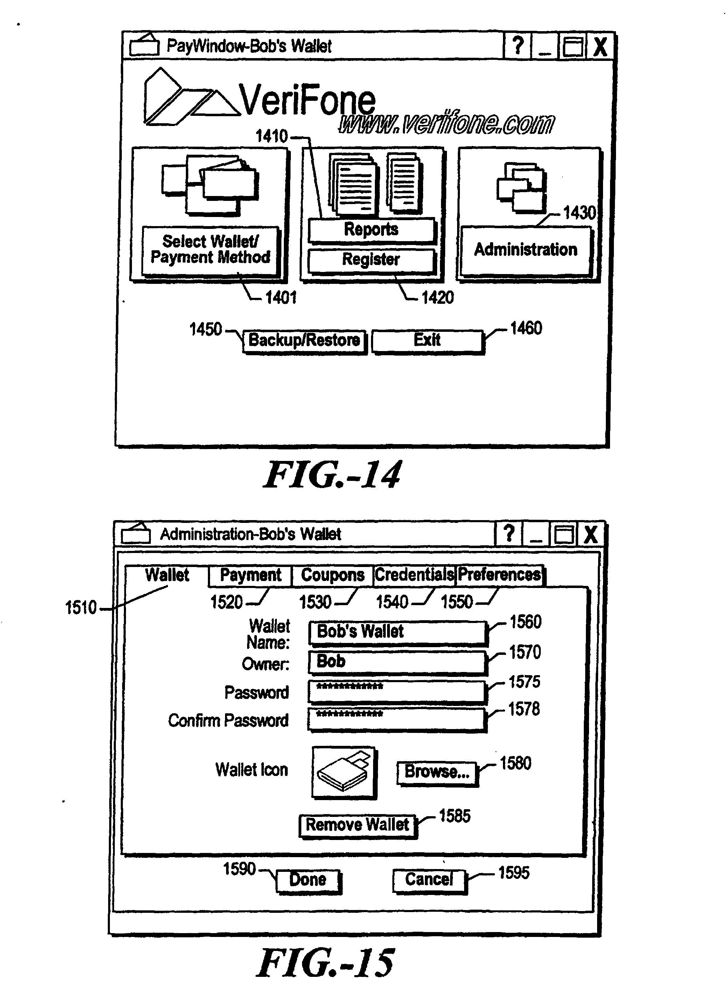

Figure **14** illustrates a Main screen in accordance with a preferred embodiment of the invention. This screen is displayed when a user runs an application in the local mode and indicates that the paywindow is operating in administration mode. The application launches from the desktop. The screen controls include a button for selecting wallet **1401** which displays the paywindow screen and allows a user to open or create a new wallet. Another button, the report button **1410** opens an instance of the report window when it is selected. Selecting the register button **1420** opens the register window which allows a user to select from a variety of register transactions. Selection of the administration button **1430** opens the administration screen which allows a user to perform various administrative tasks. If a user selects the backup/restore button **1450**, then the backup/restore dialog is initiated. Finally, selection of the exit button **1460** closes the screen and terminates the application.

### Administration

Figure **15** is an illustration of an Administration display screen in accordance with a preferred embodiment. This is the main screen for entering information pertinent to wallets, payment methods and user preference settings into the system. The information is organized and presented in pages of grouped data. The Administration display is launched from the Administration button **1430** of Figure **14** in response to selection of the button by a user. The wallet tab **1510** controls management of pages of related information pertaining to the currently active wallet. Users can utilize the mouse or the keyboard to modify the pages of information. The done button **1590** saves the new information in the wallet when it is selected. The cancel button **1595** discards the changes and closes the display screen when it is selected.

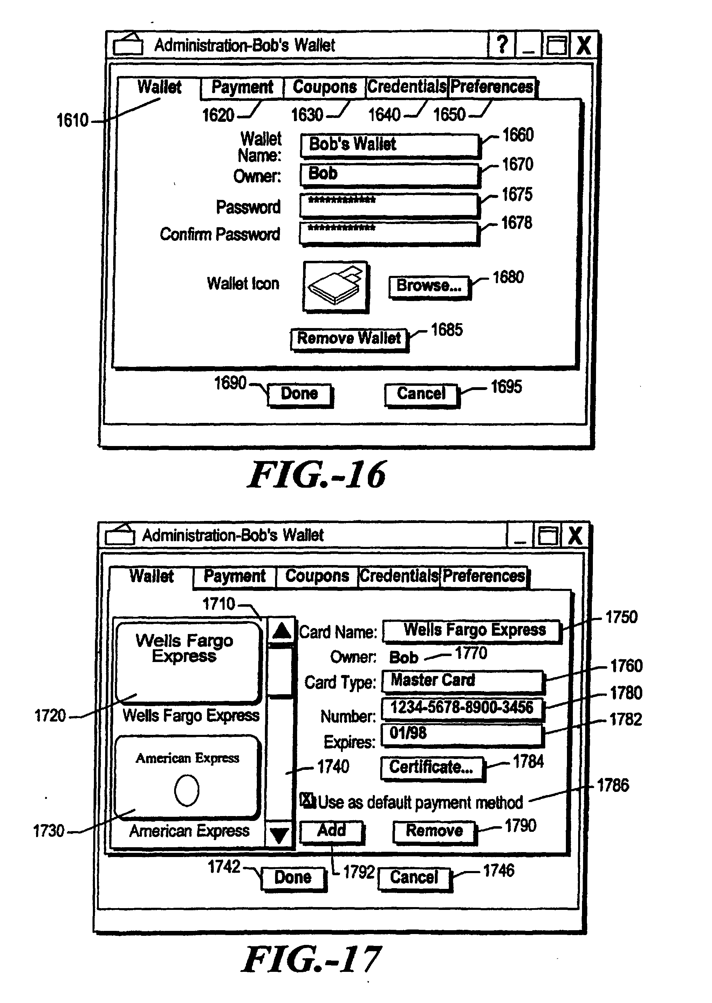

Figure **16** illustrates a display of the administration wallet page in accordance with a preferred embodiment. The user must enter the name of the wallet into the entry field **1660,** the wallet's owner must be entered at **1670,** a password corresponding to the named wallet must be entered at **1675** the password entry is displayed with "*" characters entered in place of the letters and numbers of the password, and a confirm password must be entered at entry field **1678**. This confirm password **1678** must match the password entered at **1675.** The browse button **1680** opens the file open dialog to present a user with a list of wallets to choose from using a wallet icon file as input to the process. The remove wallet button **1685** removes the current wallet from the system and displays a confirmation message box prior to deletion.
The administration payment tab **1520** of Figure **15** initiates a screen as illustrated in Figure **17.** Figure **17** is a payment administration window in accordance with a preferred embodiment. A user may use payment page of the administration screen to view or edit a payment method's information.

The listbox control **1710** displays all the payment methods currently installed in this wallet. A user can scroll the listbox control to see all of the payment methods available to the owner 1760. The user must select a payment method prior to viewing its information. The selection is accomplished by positioning the cursor over a payment method that the user requires and clicking the mouse button or pressing the enter key to select that card as the method for payment. The card name edit field **1750** is used to display or edit the name that the system utilizes to refer to the currently selected method for payment. The card type data entry field **1760** corresponds to the various types of methods for payment. Many of the types are predefined for a user, such as: master card, visa, discover.

An associated card number entry field **1780** is also provided to display and/or edit the card number. An entry field **1782** is also provided for display and/or edit of the card's expiration date. A certificate dialog box **1784** button is also provided for initiating the attachment or editing of a certificate. A checkbox control **1792** is also provided if a user desires to make the selected card the default method for payment for a particular wallet. This is an attractive feature since it eliminates selection of a particular method of payment each time a wallet is opened. The ergonomics are well thought out to parallel a user's wallet in which the favorite credit card is usually stored in a convenient location for ready retrieval when the holder of payment methods (ie., wallet, purse, brief case, smart card) is selected. Two other buttons are provided for adding **1786** and removing **1790** a payment method to/from the holder of payment methods. The removal button **1790** displays a confirmation message prior to removal of the payment method. A button to signify completion of processing **1742** and a button for cancelling processing **1746** are also provided.

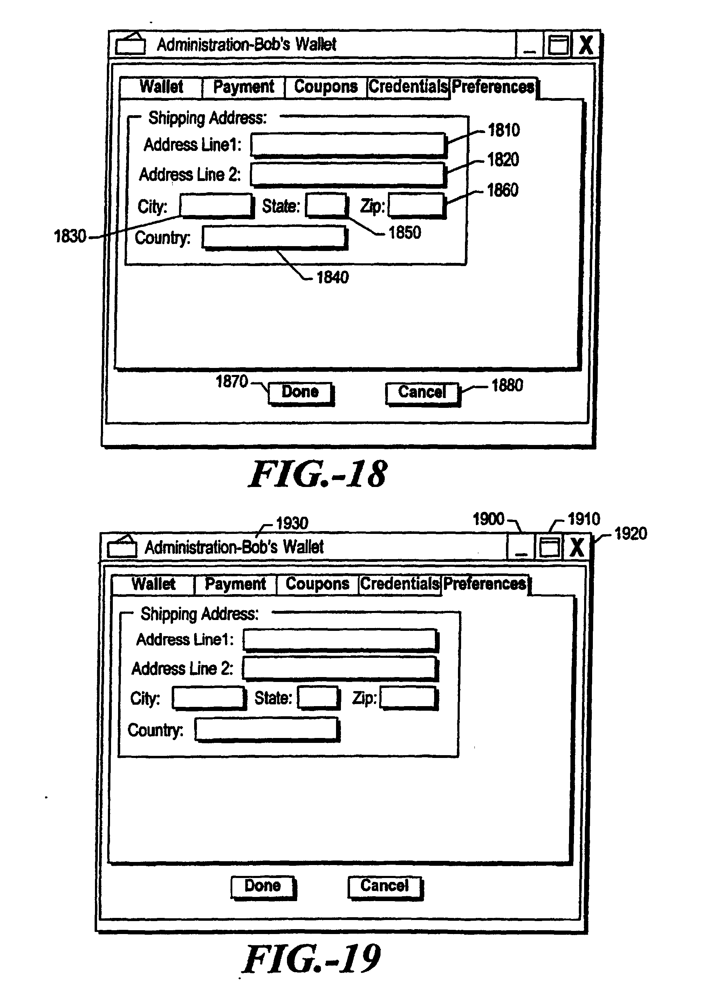

Figure **18** is an illustration of the administration preferences page in accordance with a preferred embodiment. The address line one edit control **1810** is used to view or edit the first shipment address line for a particular user. The address line two edit control **1820** is used to view or edit the second shipment address line for a particular user. The city edit control **1830** is used to edit or view the shipment city for a particular user. The state edit control **1850** is used to edit or view the shipment state for a particular user. The zip code edit control **1860** is used to edit or view the shipment zip for a particular user. The country edit control **1840** is used to edit or view the shipment country for a particular user. A button to signify completion of processing **1870** and a button for cancelling processing **1880** are also provided.

Figure **19** illustrates the window controls in accordance with a preferred embodiment. The name of the active window is always displayed in the upper left hand corner **1930** for easy recognition by a user. The upper right hand corner has three buttons for minimizing the display **1900,** maximizing the display **1910** and closing a display **1920**. One of ordinary skill in the art will readily comprehend that other windowing display tools could be substituted for the tools described without undue experimentation. A touch display screen could also be substituted for environments where a mouse or keyboard might not be appopriate. One could even envision the displays being manipulated using a remote control device (infrared) that interfaces with a television set for viewing, selecting and paying for purchases from the comfort of a living room or easy chair.

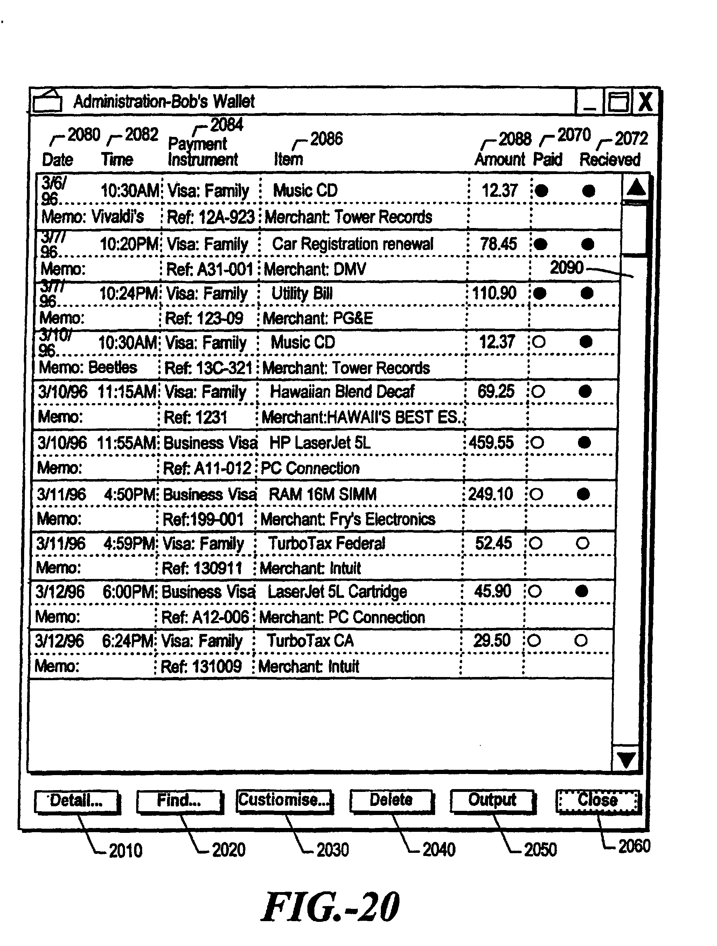

Figure **20** is a register display in accordance with a preferred embodiment of the invention. The register display lists all transactions in chronological order and allows a user to navigate through and examiner transactions associated with a wallet. A user also has the option of searching for particular transactions and examining detailed transaction information for any transaction. Finally a user can reconcile transactions against a bank statement as well as a shipment list of merchandise. This display is initiated by selecting the register button from the administration screen. A user may only create a single instance of the register display, so additional clicks of the mouse button is only be utilized to set the focus to the single register display window. Clicking on an item displayed on the register display sets the selection highlight to the hit record associated with the area the cursor is currently displayed. Double clicking brings up additional detail on the currently selected record.

If the user presses the tab key, the cursor moves to and highlights the next control on the display. If the user presses the enter key, the highlighted button is invoked on the register display. When a transaction record is highlighted, pressing the up arrow key moves the highlight (selected item) to the preceding record. When a transaction record is highlighted, pressing the down arrow moves the highlight (selected area) to the next record. Selecting the home key sets the highlight to the first record in the register report, and similarly, pressing the end key sets the highlight to the last record in the register report. Selecting the detail button **2010** on the register display opens the register detail dialog. Selecting the find button **2020** opens the register find dialog. Selecting the customize button **2030** opens the register customize dialog. Once a user has customized a particular register, then the customize button **2030** displays a colored dot symbol to indicate an active filter is defined. If the delete button **2040** is selected, then the highlighted register is deleted after an appropriate confirmation message box is displayed and selected in the affirmative. Moreover, selection of the output button **2050,** opens the output dialog with a user. Finally, selection of the close button **2060** closes the register screen. A scroll bar **2090** is also provided to allow a user to scroll through records extending over a single page. For each record, a date **2080,** a time **2082,** a payment instrument **2084,** an item **2086,** an amount **2088,** a paid **2070** and a received **2072** entry is provided in a columnar representation. The paid **2070** and received **2072** allow a user to check/reconcile a record when paying the credit card payment.

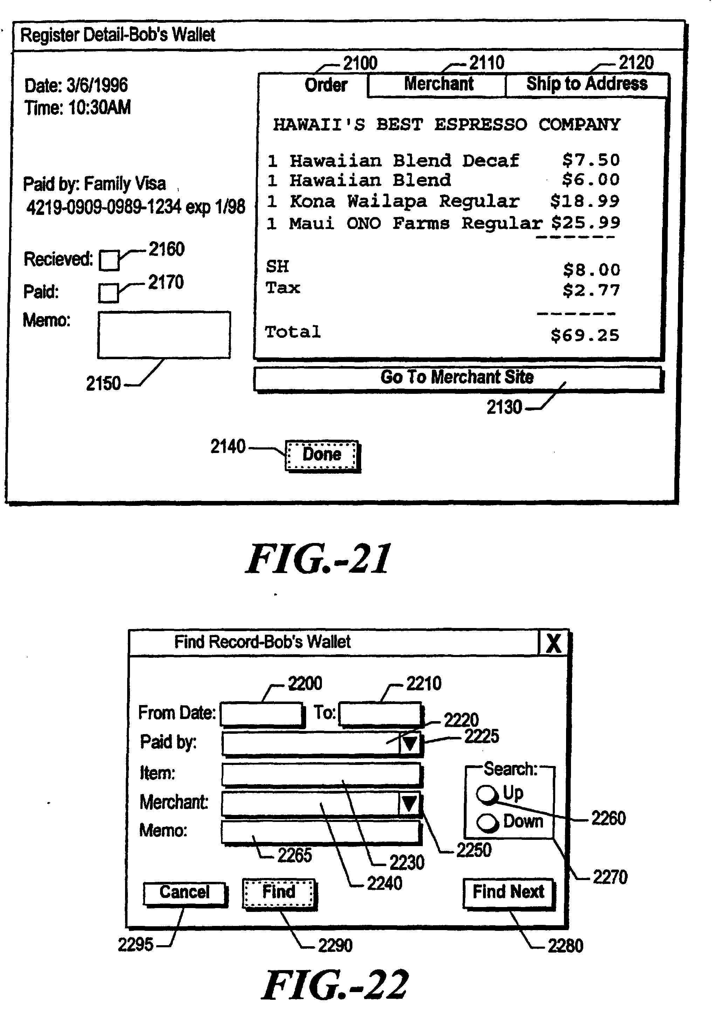

Figure **21** is register detail display in accordance with a preferred embodiment. The register detail display allows a user to view or examine all of the specific details of a transaction. The display is launched when a user double clicks on a highlighted transaction record, or when a user presses the detail **2030** button as illustrated in Figure **20** of the register display. The order tab **2100** control selects an information page on the display. The Go To Merchant Site button **2110** button spawns the internet browser and sets it to the merchant web page. The ShipToAddress **2120** provides a link to the address information for the selected merchant. The memo **2150** edit control is used to view/edit a short memo text for each transaction. The paid **2170** checkbox allows a user to check/reconcile a record when he or she pays the credit card payment. The received **2160** checkbox allows a user to check/reconcile the record when he/she receives the merchandise. The done **2140** closes the 'Register Detail' dialog and returns the focus to the register.

### Register Find

Figure **22** is a register find display in accordance with a preferred embodiment. A user utilizes this display to search for a transaction record. The find button **2020** of the register display as described with reference to Figure **20** is used to initiate this display. The from date **2200** control is used to enter the starting date of a transaction. The to date **2210** control is used to enter the ending date of the transaction. The combobox **2220** is used to list all of the payment methods in the wallet. A pulldown **2225** control causes a list of payment methods to be displayed to the user. The item **2230** control is used to enter a full or substring of the target item of the search. The merchant combo **2240** display lists all of the merchant names in the wallet. The item **2250** control causes a list of all the merchant names to be displayed for selection of the particular merchant name required. The memo **2265** edit control is used to enter the full or substring of the memo to search for. The cancel **2295** button cancels and closes the register find dialog. The find **2295** button starts the search command. The find dialog remains open during the search and the search result in the register is highlighted. The search up **2260** button and down **2270** button direct the direction of the find operation. The find next **2280** button continues the search to locate the next register record.

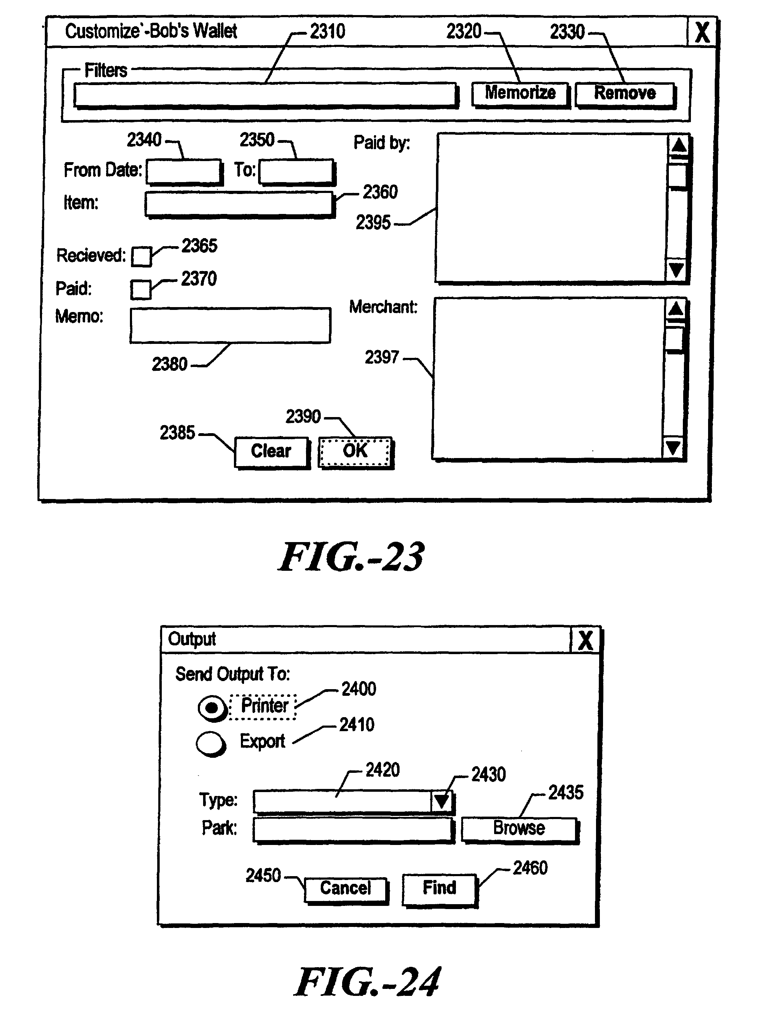

Figure **23** is a register customize display in accordance with a preferred embodiment. The display facilitates a dialog which allows a user to create a record filter for transaction records. It provides functionality to save, recall and remove filters. Saved filters are shared between the register and report functions of the paywindow in accordance with a preferred embodiment. To initiate this display, a user selects the customize button **2030** of the register screen. The from date **2340** entry field allows a user to enter a starting date to show the records after this date. The to date **2350** entry field allows a user to enter an ending date to show the records up to and including this date. The item **2360** entry field allows a user to enter a full or substring of the item field as a filter parameter. The received **2365** button allows a user to select a 'received' flag as a filter parameter. The paid **2370** button allows a user to select a 'paid' flag as a filter parameter. The memo field **2380** allows a user to enter a full or substring of the memo field as a filter parameter. A user may select one or more payment methods as a filter parameter utilizing the paid by **2395** box. This multi-selection listbox displays all the payment methods in the wallet for a user to choose from. The merchant box **2397** allows a user to select one or more merchants as a filter parameter. This multiselection listbox displays all of the merchant names in the transaction register for a user to select from. The filters **2310** allow a user to name, store and retrieve filters by using the combobox and selecting, or entering a stored filter name. The memorize **2320** button assigns the name appearing in the filter **2310** box to the parameters specified on the display. The remove **2330** button allows a user to select a filter using the combobox, and delete it. The clear **2385** button allows a user to clear all of the filter parameters. The ok **2390** button activates a filter and closes the customize dialog. The customize button of the register displays a dot indicating an active filter.

Figure **24** is a register output display for directing the output target for register information. For example, a user may select a printer or a file as the target for outputting the results of a register display. The output display is invoked by pressing the output button of a register display. The user clicks the printer button **2400** to initiate output of register display information to the printer. A user selects the export button **2410** to output the register information to a file in a file format selected form the type **2420** combobox. The user specifies a path/name for the output file in text entry field **2430.** A user may open the file save dialog by selecting the browse **2435** button and setting the output file path and file name. The cancel **2450** buton cancels the operation and closes the dialog display. The ok **2460** button closes the dialog and starts the output of the register screen.

### Report

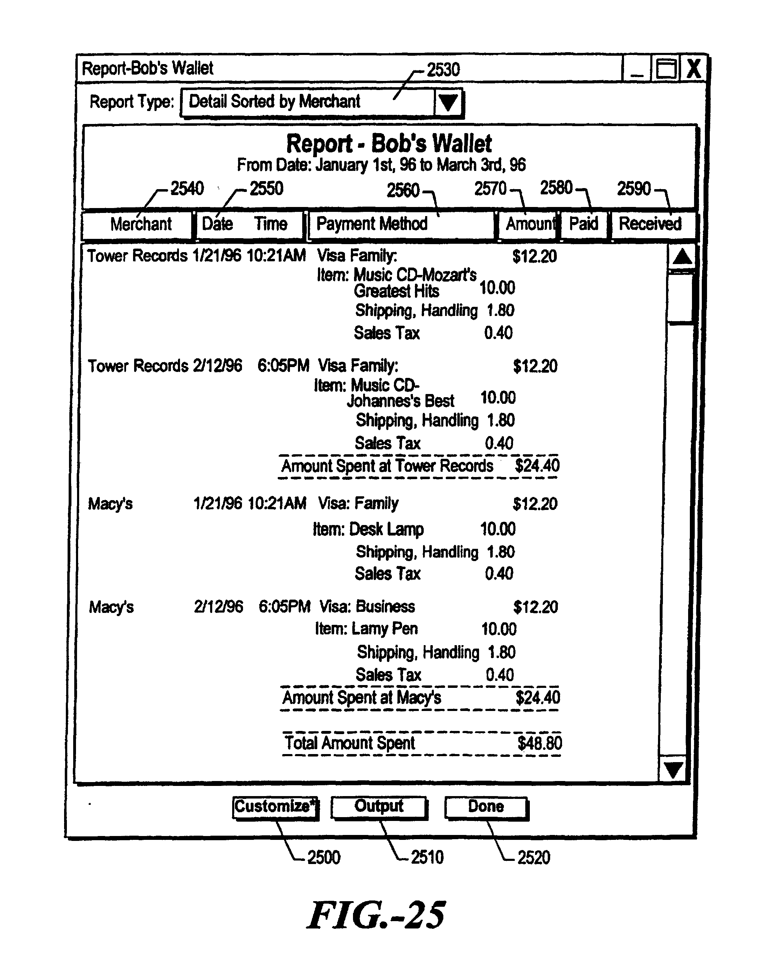

Figure **25** is a report of a wallet in accordance with a preferred embodiment. The display is a pre-formatted report for use in customizing a report. A user invokes the report by pressing a button of the paywindow display. The customize button **2500** opens the register customize dialog. If a colored dot appears inthe customize button **2500,** then a filter is currently active. The output button **2510** opens the output dialog. The done **2520** button closes the report window. The report type listbox **2530** allows a user to select a pre-formatted report type by using the report type combobox. The user can also select any of the fields **2540, 2550, 2560, 2570, 2580** or **2590** to set the report sort field. The selected sort field appears as boldface in the sort field.

### Report Customize

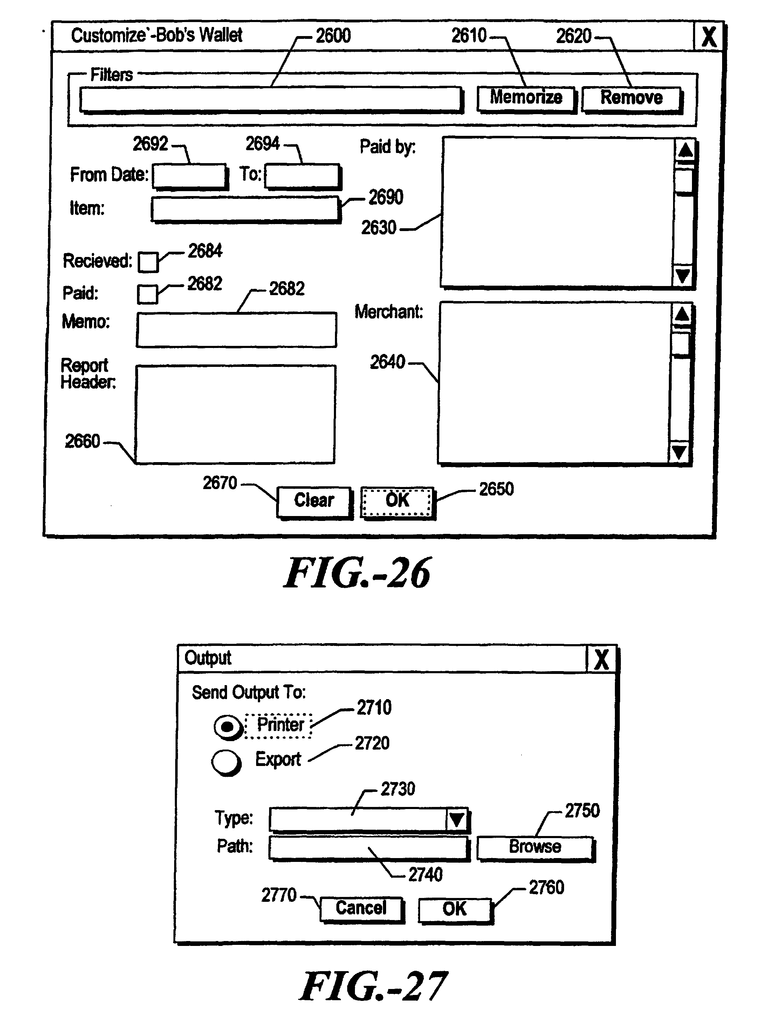

Figure **26** illustrates a report customize display in accordance with a preferred embodiment. The screen allows a user to create a record filter for transaction records. It provides functionality to save, recall and remove filter(s). Saved filters are shared between the Register and Report functions of the PayWindow. To initiate this display, a user selects the customize button of the report screen. The from date **2692** entry field allows a user to enter a starting date to show the records after this date. The to date **2694** entry field allows a user to enter an ending date to show the records up to and including this date. The item **2690** entry field allows a user to enter a full or substring of the item field as a filter parameter. The received **2684** button allows a user to select a 'received' flag as a filter parameter. The paid **2682** button allows a user to select a 'paid' flag as a filter parameter. The memo field **2680** allows a user to enter a full or substring of the memo field as a filter parameter. A user may select one or more payment methods as a filter parameter utilizing the paid by **2630** box. This multi-selection listbox displays all the payment methods in the wallet for a user to choose from. The merchant box **2640** allows a user to select one or more merchants as a filter parameter. This multiselection listbox displays all of the merchant names in the report for a user to select from. The filters **2600** allow a user to name, store and retrieve filters by using the combobox and selecting, or entering a stored filter name. The memorize **2610** button assigns the name appearing in the filter **2610** box to the parameters specified on the display. The remove **2620** button allows a user to select a filter using the combobox, and delete it. The report header **2660** entry field allows a user to enter information for display as a title for the report. The clear **2670** button allows a user to clear all of the filter parameters. The ok **2650** button activates a filter and closes the customize dialog. The customize button of the report displays a dot indicating an active filter.

### Report Output

Figure **27** is a report output display in accordance with a preferred embodiment. A user can select the output target utilizing this dialog. This display is invoked by selecting the output button **2510** of the report display. A user may select a target of choice using this dialog. A user selects the printer **2710** checkbox if the ouput from the report is targetted for a printer. This action disables all controls under the export button. A user selects the export button **2720** to output the report to an export file. This action enables all export button controls. A user selects a file format for the export operation file utilizing the pull down menu **2730.** A user selects a path/file name for the output file using the path data entry field **2740**. The browse button **2750** allows a user to open a file save dialog to browse and set the file path or file name. The cancel button **2770** cancels the operation and closes the dialog. The ok button **2760** closes the dialog and starts the output process.

In an alternative embodiment fo the Register and Report functions described above, a separate financial application program, such as Quicken, could be utilized as a helper application with the internet program. This feature would have the additional advantage of allowing seamless reporting with other financial transactions bundled with the Quicken application. Another alternative embodiment could utilize JPEG format or GIF formatted files for storing and retrieving image files as a compression alternative. These standards are well known in the industry and proven effective for reducing the amount of storage that is necessary for saving graphic files and bit-mapped images.

### Payment Instrument Holders

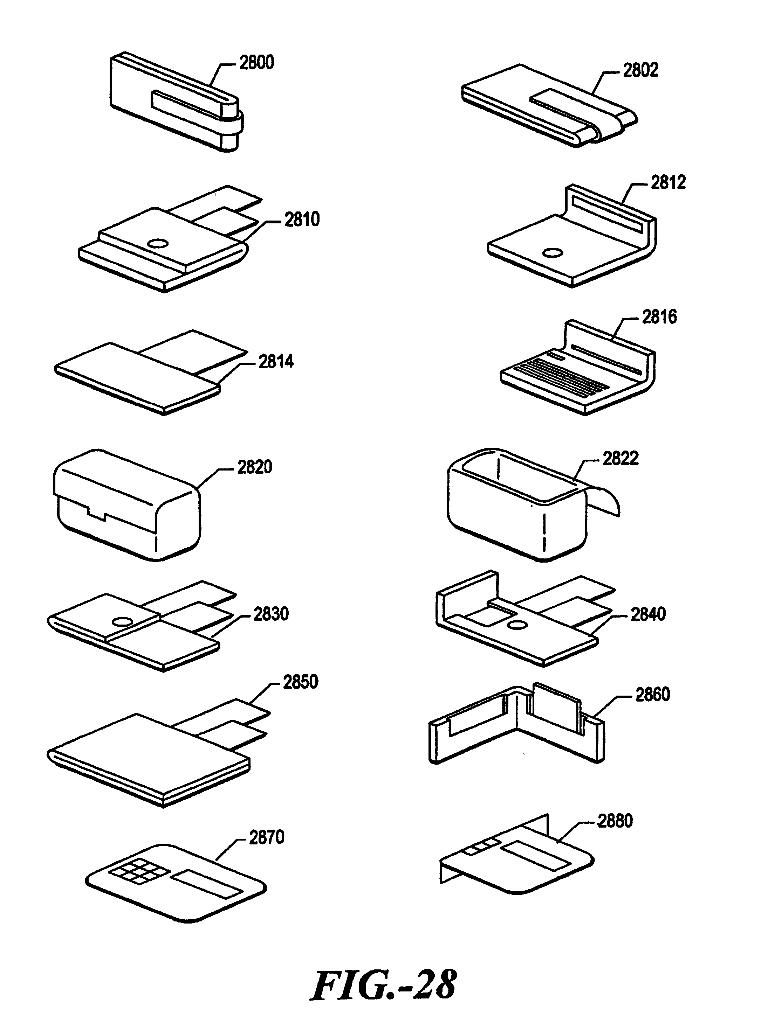

Figure **28** illustrates various payment instrument holders in accordance with a preferred embodiment. A moneyclip is shown at **2800** and **2802.** Various wallets are shown in the closed position at **2810, 2814, 2830** and **2850**; and in the open position at **2812, 2816, 2840** and **2860.** A purse in the closed position is depicted at **2820** and in the open position at **2822.** Finally, a smartcard is shown in the closed position at **2870** and in the open position at **2880.** One of ordinary skill in the art will recognize that the depictions are representations of bit mapped images that could be stored as JPEG, GIF or other representations to conserve space.

### Certificate Processing

A payment instrument must be certified by a "certificate issuing authority" before it can be used on a computer network. In the case of credit card payments, the issuer may be one of the card issuing banks, but it might also be a merchant (eg SEARS), a transaction aquiring bank or an association such as VISA or Mastercard.

Payment instrument information is stored in the consumer's wallet. The certificate which authorizes the payment instrument will be stored along with that data in a secured database. The process of acquiring a certificate is described below. A certificate can be delivered to a consumer in a preconfigured wallet. The consumer receives a wallet which contains the certificate together with the necessary details associated with a payment instrument including a payment instrument bitmap which is authorized by a certificate issuing authority or the agencies represented by the issuing authority.

### Obtaining a certificate

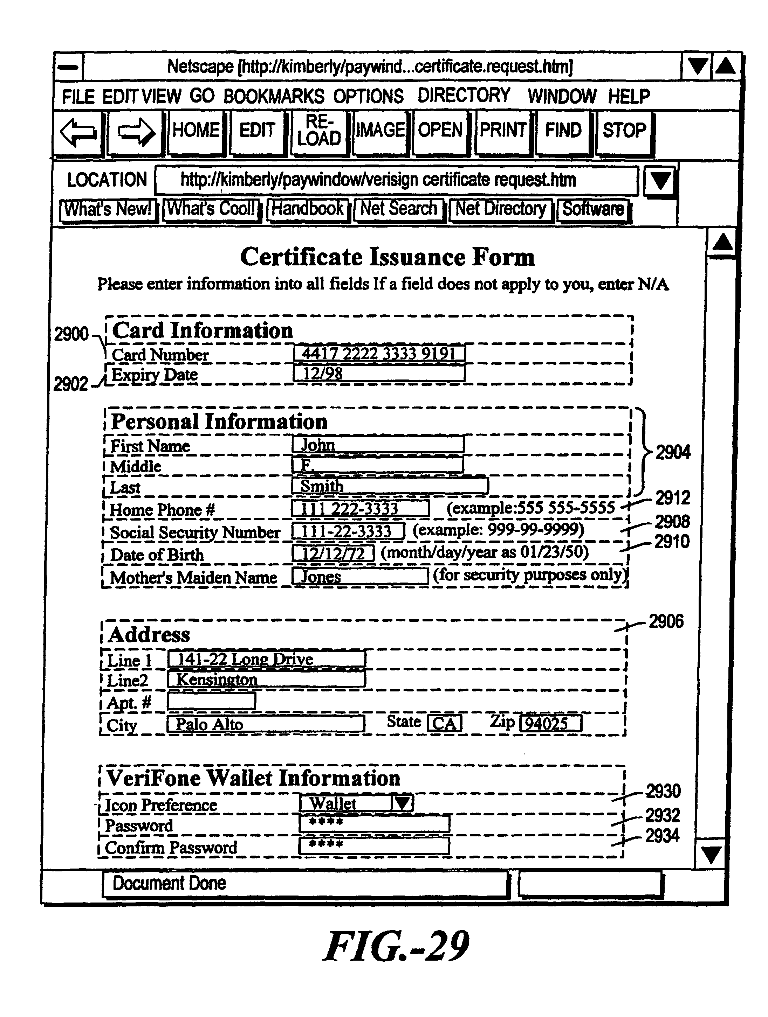

A consumer will deliver or cause to be delivered information to a certificate issuing authority. Figure **29** is an illustration of a certificate issuance form in accordance with a preferred embodiment. A user may fill out the form on-line, on paper and mail it in, or get his bank or credit card company to deliver it. The consumer delivered data will usually contain a public key belonging to a security key pair generated by consumer software. This information will normally be mailed to the consumer's address and actuated by a telephone call from the consumer. The certificate authority takes this information and uses it to validate that he is indeed entitled to use the payment method. This processing normally takes a few days to accomplish. Information will normally be exchanged with the organization issuing the payment method in the physical space if there is one, and with credit agencies. The certificate information is loaded into the consumer's software to enable payment processing to proceed online.

In some cases the consumer will be able to select details about a payment instument holder (wallet) he desires to own. This may be the icon representing a holder, the access password or other information. After creating the certificate, the issuing authority can use information received in the certificate application to create a custom payment instrument holder ready to use. This payment instrument holder will contain the following information. Payment instrument information including card number **2900** and expiration date **2902.** Personal information including name **2904**, address **2906**, social security number **2908** and date of birth **2910.**

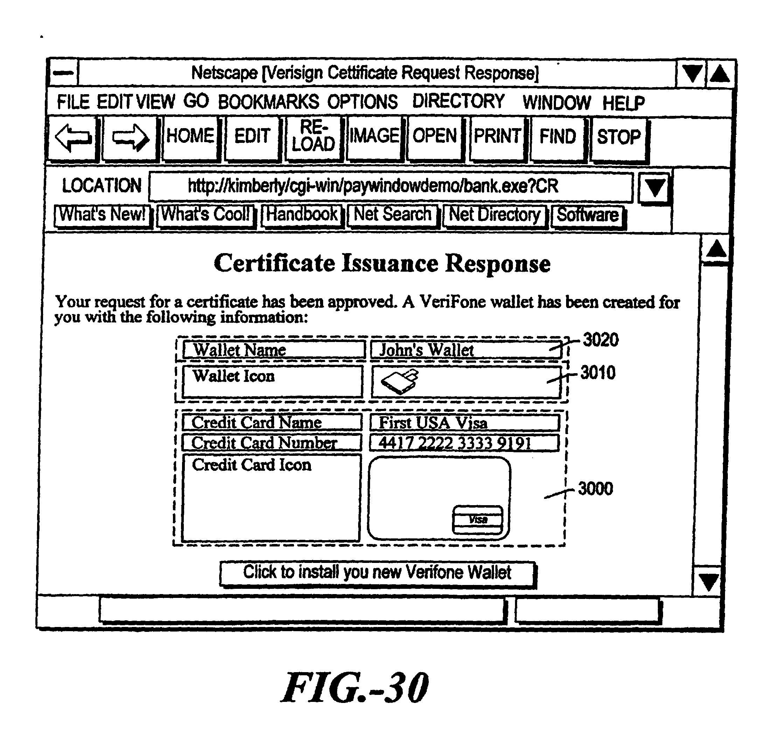

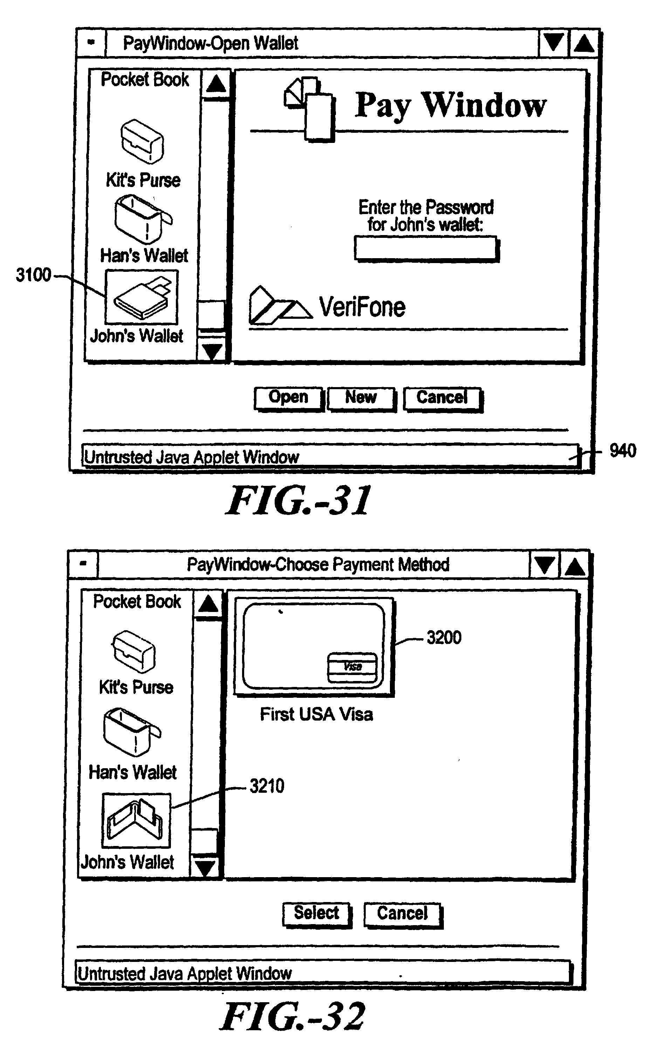

The associated certificate ( eg X509 standard ), an associated public key or in some cases public/private key pair ( eg RSA), and an approved bitmap representing the payment instrument are provided to the requesting consumer. Figure **30** illustrates a certificate issuance response in accordance with a preferred embodiment. An approved bitmap for a VISA card is shown at **3000.** Also a default payment holder **3010** and a default payment holder name are provided with the certificate issuance. After the consumer aquires the payment instrument holder **3010,** the payment instrument holder is immediately visible to him in his collection of payment instrument holders. Figure **31** illustrates a collection of payment instrument holders in accordance with a preferred embodiment. The predefined payment instrument holder **3100** is the same JOHN's WALLET that was predefined based on defaults by the certificate issuance form. Figure **32** illustrates the default payment instrument bitmap **3200** associated with the predefined payment instrument holder **3210** resulting from the consumer filling in and obtaining approval for a VISA card.

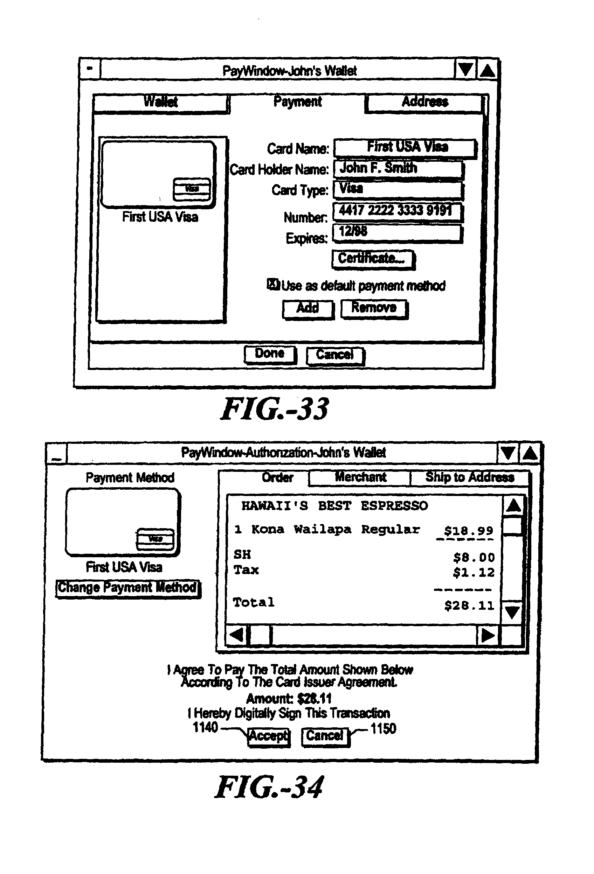

Figure **33** illustrates a selected payment instrument with a fill in the blanks for the cardholder in accordance with a preferred embodiment. Next time the payment instrument holder is opened in a payment context the certificate issuing authorty's approved instrument bitmap can be used to select the payment instrument and utilize it to make purchases. Figure **34** illustrates a coffee purchase utilizing the newly defined VISA card in accordance with preferred embodiment of the invention.

## Claims

1. A method for initiating authorization in a computer with an attached display (138, 400), the computer being connected to a network for receiving and transmitting network information (110, 430), the method comprising the steps of:
(a) connecting the computer, via the network, to a network site remotely located away from the computer;
(b) communicating, via the network, information between the network site and the computer;
(c) displaying, in response to the information, at least one payment instrument (1720, 1730) as a bitmap image (3200) of the payment instrument (1720);
(d) selecting a payment instrument (3200, 1720) from the at least one payment instrument using the bitmap image; and
(e) utilizing information (1700-1792) associated with said payment instrument (3200, 1720) for processing across the network whereby a transaction is processed through the network site and authorization for the transaction is obtained.

2. The method as recited in claim 1, wherein the payment instrument is represented in accordance with issuer preferences.

3. The method as recited in claim 1, including the step of presenting an authorization display which presents a summary of proposed transactions and an agreement to complete a transaction with said payment instrument.

4. The method as recited in claim 3, including a link that facilitates changing to another payment instrument, obtaining information to complete the transaction, or reviewing information associated with the payment internment.

5. The method as recited in claim 3, including the step of displaying an indicia representative of authorization received.

6. The method as recited in claim 1, including the step of imbedding links to a merchant, issuer, advertiser or a distributor on the display.

7. The method as recited in claim 1, including the step of varing the payment instruments enabled for selection based on a provider's practices.

8. The method as recited in claim 1, including the step of displaying a list of each transaction that a payment instrument has been used for on the display.

9. The method as recited in claim 1, including the seep of displaying a menu of options based on the payment instrument authorized on the display.

10. The method as recited in claim 1, including the step of varying processing based on the payment instrument selected.

11. An apparatus for initiating authorization in a computer (100-138), under the control of software (180-186; 300-380; 400-480) the computer (100-138) being attached to a display (136-138), attached to an input device (124), and being connected to a network for receiving and transmitting network information (134-135), the apparatus comprising:
(a) the computer, under the control of software, forming a network connection between the computer and a remotely located network site;
(b) the computer, under the control of software and via the network, transferring data between the computer and the remotely located network site whereby the data is exchanged through the use of an Internet common gateway interface (CGI);
(c) the computer, under the control of software, displaying on the display at least one payment instrument as a bitmap image of the payment instrument (700-796; 1020, 1030 and 1040);
(d) the computer, under the control of software, selecting a payment instrument (1030) using the input device (124); and
(e) the computer, under the control of software, utilizing information associated with the selected instrument for authorization processing (600-640) across the network whereby a transaction is processed through the network site and authorization for the transaction is obtained.

12. The apparatus as recited in claim 11, wherein the payment instrument is represented in accordance with issuer preferences.

13. The apparatus as recited in claim 11, including said computer under the control of software providing linkages to other displays providing additional functions associated with the process being authorized.

14. The apparatus as recited in claim 11, including said computer under the control of software presenting a summary of proposed transactions and agreement to complete a transaction with said payment instrument.

15. The apparatus as recited in claim 11, including a link that facilitates changing to another payment instrument, obtaining information to complete the transaction, or reviewing information associated with the payment instrument.

16. The apparatus as recited in claim 14, including said computer under the control of software prompting for an authorization code to authenticate a payment instrument on the display.

17. The apparatus as recited in claim 14, including said computer under the control of software displaying an indicia representative of authorization received on the display.

18. The apparatus as recited in claim 11, including said computer under the control of software imbedding links so merchants, issuer, advertiser or distributor on the display.

19. The apparatus as recited in claim 11, including said computer under the control of software displaying an indicia representative of a payment instrument exceeding an authorization level on the display.

20. The apparatus as recited in claim 11, including said computer under the control of software defining a default payment instrument for each merchant on the display.

21. The apparatus as recited in claim 11, including said computer under the control of software displaying a list of each transaction that a payment instrument has been used for.

22. The apparatus as recited in claim 11, wherein the payment instrument is represented in accordance with an issuer preference on the display.

23. The apparatus as recited in claim 11, wherein payment processing is based on the payment instrument selected.

## Patentansprüche

1. Verfahren zur Zuteilung einer Berechtigung in einem Computer mit einer beigefügten Anzeige (138, 400), wobei der Computer an ein Netzwerk zum Senden und Empfangen von Netzwerkinformation (110, 430) angeschlossen ist, wobei das Verfahren die Schritte umfaßt:
(a) Verbinden des Computers über das Netzwerk zu einer Netzwerkstelle, die vom Computer entfernt angeordnet ist;
(b) Kommunizieren von Information über das Netzwerk zwischen der Netzwerkstelle und dem Computer;
(c) Anzeigen, abhängig von der Information, von mindestens einem Zahlungsmittel (1720, 1730) als ein Bitmap-Image (3200) des Zahlungsmittels (1720);
(d) Auswählen eines Zahlungsmittels (3200, 1720) aus mindestens einem Zahlungsmittel, das das Bitmap-Image verwendet; und
(e) Verwenden von der dem Zahlungsmittel (3200, 1720) zugeordneten Information (1700-1792) zur Verarbeitung über das Netzwerk, wobei eine Transaktion durch die Netzwerkstelle verarbeitet wird und die Berechtigung für die Transaktion erteilt wird.

2. Verfahren nach Anspruch 1, worin das Zahlungsmittel in Übereinstimmung mit den Ausstellerpräferenzen dargestellt ist.

3. Verfahren nach Anspruch 1, das den Schritt der Präsentation einer Berechtigungsanzeige beinhaltet, welche eine Aufstellung von vorgeschlagenen Transaktionen und eine Zustimmung zum Abschließen der Transaktion mit dem Zahlungsmittel aufzeigt.

4. Verfahren nach Anspruch 3, das eine Verknüpfung beinhaltet, die den Wechsel zu einem anderen Zahlungsmittel ermöglicht, die Information zum Abschließen der Transaktion enthält oder die Information überprüft, die dem Zahlungsmittel zugeordnet ist.

5. Verfahren nach Anspruch 3, das den Schritt der Anzeige eines Freimachungsvermerks beinhaltet, stellvertretend zur erhaltenen Berechtigung.

6. Verfahren nach Anspruch 1, das den Schritt der Einbettung von Verknüpfungen zu einem Händler, Aussteller, Werber oder einem Verteiler in der Anzeige beinhaltet.

7. Verfahren nach Anspruch 1, das den Schritt der Variierung der zur Auswahl freigegebenen Zahlungsmittel, basierend auf den Verfahren des Anbieters, beinhaltet.

8. Verfahren nach Anspruch 1, das den Schritt des Anzeigens einer Auflistung von jeder Transaktion, für die das Zahlungsmittel benutzt worden ist, in der Anzeige beinhaltet.

9. Verfahren nach Anspruch 1, das den Schritt des Anzeigens eines Menüs von Optionen, basierend auf dem autorisierten Zahlungsmittel, in der Anzeige beinhaltet.

10. Verfahren nach Anspruch 1, das den Schritt der Variierung der Verarbeitung, basierend auf dem ausgewählten Zahlungsmittel, beinhaltet.

11. Vorrichtung zur Zuteilung einer Berechtigung in einem Computer (100-138), mit Softwaresteuerung (180-186; 300-380; 400-480) ist der Computer (100-138) an eine Anzeige (136-138) und eine Eingabevorrichtung (124) angeschlossen und mit einem Netzwerk zum Senden und Empfangen von Netzwerkinformation (134-135) verbunden, wobei die Vorrichtung umfaßt:
(a) Computer, der mit Softwaresteuerung eine Netzwerkverbindung zwischen dem Computer und einer entfernt angebrachten Netzwerkstelle bildet;
(b) Computer, der mit Softwaresteuerung und über das Netzwerk Daten zwischen dem Computer und der entfernt angebrachten Netzwerkstelle transferiert, wobei die Daten durch Benutzung eines CGI's (common gateway interface) ausgetauscht werden;
(c) Computer, der mit Softwaresteuerung in der Anzeige mindestens ein Zahlungsmittel als ein Bitmap-Image des Zahlungsmittels (700-796; 1020, 1030 und 1040) anzeigt;
(d) Computer, der mit Softwaresteuerung ein Zahlungsmittel (1030) durch die Eingabevorrichtung (124) auswählt; und
(e) Computer, der mit Softwaresteuerung Informationen verwendet, die mit dem ausgewählten Instrument zur Berechtigungsverarbeitung (600-640) über ein Netzwerk in Zusammenhang stehen, wobei eine Transaktion durch die Netzwerkstelle verarbeitet wird und die Berechtigung für die Transaktion erteilt wird.

12. Vorrichtung nach Anspruch 11, worin das Zahlungsmittel in Übereinstimmung mit den Ausstellerpräferenzen dargestellt ist.

13. Vorrichtung nach Anspruch 11, die den Computer mit Softwaresteuerung beinhaltet, der Verknüpfungen zu anderen Anzeigen bereitstellt, die zusätzliche Funktionen verbunden mit der Berechtigungsverarbeitung bereitstellen.

14. Vorrichtung nach Anspruch 11, die den Computer mit Softwaresteuerung beinhaltet, der eine Aufstellung von vorgeschlagenen Transaktionen und eine Zustimmung zum Abschließen einer Transaktion mit dem Zahlungsmittel darstellt.

15. Vorrichtung nach Anspruch 11, die eine Verknüpfung beinhaltet, die den Wechsel zu einem anderen Zahlungsmittel ermöglicht, das Informationen zum Abschließen der Transaktion enthält oder das Information überprüft, die dem Zahlungsmittel zugeordnet ist.

16. Vorrichtung nach Anspruch 14, die den Computer mit Softwaresteuerung beinhaltet, der einen Berechtigungscode zum Bestätigen eines Zahlungsmittels in der Anzeige fordert.

17. Vorrichtung nach Anspruch 14, die den Computer mit Softwaresteuerung beinhaltet, der in der Anzeige einen Vermerk, stellvertretend zur erhaltenen Berechtigung,_ anzeigt.

18. Vorrichtung nach Anspruch 11, die den Computer mit Softwaresteuerung beinhaltet, der Verknüpfungen zu Händlern, Aussteller, Werber oder Verteiler in die Anzeige einbettet.

19. Vorrichtung nach Anspruch 11, die den Computer mit Softwaresteuerung beinhaltet, der in der Anzeige einen Vermerk, stellvertretend zu einem Zahlungsmittel, das eine Berechtigungsstufe überschreitet, anzeigt.

20. Vorrichtung nach Anspruch 11, die den Computer mit Softwaresteuerung beinhaltet, der in der Anzeige ein Standard Zahlungsinstrument für jeden Händler definiert.

21. Vorrichtung nach Anspruch 11, die den Computer mit Softwaresteuerung beinhaltet, der eine Auflistung von jeder Transaktion für die das Zahlungsmittel benutzt worden ist, anzeigt.

22. Vorrichtung nach Anspruch 11, worin das Zahlungsmittel in der Anzeige in Übereinstimmung mit einer Ausstellerpräferenz dargestellt ist.

23. Vorrichtung nach Anspruch 11, worin die Zahlungsverarbeitung auf dem ausgewählten Zahlungsmittel basiert.

## Revendications

1. Procédé pour initialiser une autorisation dans un ordinateur avec un dispositif d'affichage attaché (138, 400), l'ordinateur étant connecté à un réseau pour recevoir et transmettre des informations de réseau (110, 430), le procédé comprenant les étapes consistant à :
(a) connecter l'ordinateur, par l'intermédiaire du réseau, à un site du réseau situé à distance, éloigné de l'ordinateur ;
(b) communiquer, par l'intermédiaire du réseau, des informations entre le site du réseau et l'ordinateur ;
(c) afficher, en réponse aux informations, au moins un instrument de paiement (1720, 1730) sous la forme d'une image bitmap (3200) de l'instrument de paiement (1720) ;
(d) choisir un instrument de paiement (3200, 1720) à partir de l'au moins un instrument de paiement en utilisant l'image bitmap ; et
(e) utiliser des informations (1700 à 1792) associées audit instrument de paiement (3200, 1720) pour traitement sur le réseau, de telle sorte qu'une transaction soit traitée par l'intermédiaire du site du réseau et qu'une autorisation pour la transaction soit obtenue.

2. Procédé selon la revendication 1, dans lequel l'instrument de paiement est représenté en fonction des préférences de l'utilisateur.

3. Procédé selon la revendication 1, comportant l'étape consistant à présenter un affichage d'autorisation présentant un résumé des transactions proposées et un accord pour achever une transaction avec ledit instrument de paiement.

4. Procédé selon la revendication 3, comportant un lien qui facilite le changement vers un autre instrument de paiement, l'obtention d'informations pour achever la transaction ou le réexamen des informations associées à l'instrument de paiement.

5. Procédé selon la revendication 3, comportant l'étape consistant à afficher une indication représentant une autorisation reçue.

6. Procédé selon la revendication 1, comportant l'étape consistant à incorporer des liens vers un commerçant, un utilisateur, un annonceur ou un distributeur sur le dispositif d'affichage.

7. Procédé selon la revendication 1, comportant l'étape consistant à modifier les instruments de paiement activés pour la sélection en se basant sur les habitudes des fournisseurs.

8. Procédé selon la revendication 1, comportant l'étape consistant à afficher sur le dispositif d'affichage une liste de chaque transaction pour laquelle un instrument de paiement a été utilisé.

9. Procédé selon la revendication 1, comportant l'étape consistant à afficher sur le dispositif d'affichage un menu d'options basé sur l'instrument de paiement autorisé.

10. Procédé selon la revendication 1, comportant l'étape consistant à modifier le traitement en se basant sur l'instrument de paiement choisi.

11. Dispositif pour initialiser une autorisation dans un ordinateur (100 à 138) sous le contrôle d'un logiciel (180 à 186 ; 300 à 380 ; 400 à 480), l'ordinateur (100 à 138) étant attaché à un dispositif d'affichage (136 à 138), attaché à un dispositif d'entrée (124), et étant connecté à un réseau pour recevoir et transmettre des informations de réseau (134 à 135), le dispositif comprenant :
(a) l'ordinateur, sous le contrôle du logiciel, effectuant une connexion de réseau entre l'ordinateur et un site du réseau situé à distance ;
(b) l'ordinateur, sous le contrôle du logiciel, et par l'intermédiaire du réseau, transférant des données entre l'ordinateur et le site du réseau situé à distance, de façon que des données soient échangées en utilisant une interface de passerelle commune Internet (CGI) ;
(c) l'ordinateur, sous le contrôle du logiciel, affichant sur le dispositif d'affichage, au moins un instrument de paiement sous la forme d'une image bitmap de l'instrument de paiement (700 à 796 ; 1020, 1030 et 1040) ;
(d) l'ordinateur, sous le contrôle du logiciel, choisissant un instrument de paiement (1030) en utilisant le dispositif d'entrée (124) ; et
(e) l'ordinateur, sous le contrôle du logiciel, utilisant les informations associées à l'instrument sélectionné pour traitement d'autorisation (600 à 640) sur le réseau, de telle sorte qu'une transaction soit traitée par l'intermédiaire du site du réseau et qu'une autorisation pour la transaction soit obtenue.

12. Dispositif selon la revendication 11, dans lequel l'instrument de paiement est représenté en fonction des préférences de l'utilisateur.

13. Dispositif selon la revendication 11, comportant la fourniture par ledit ordinateur, sous le contrôle du logiciel, de liens vers d'autres dispositifs d'affichage procurant des fonctions supplémentaires associées au processus autorisé.

14. Dispositif selon la revendication 11, comportant la présentation par ledit ordinateur, sous le contrôle du logiciel, d'un résumé des transactions proposées et de l'accord pour achever une transaction avec ledit instrument de paiement.

15. Dispositif selon la revendication 11, comportant un lien qui facilite le changement vers un autre instrument de paiement, l'obtention d'informations pour achever la transaction ou le réexamen des informations associées à l'instrument de paiement.

16. Dispositif selon la revendication 14, comportant la demande sur le dispositif d'affichage par ledit ordinateur, sous le contrôle du logiciel, d'un code d'autorisation pour authentifier un instrument de paiement.

17. Dispositif selon la revendication 14, comportant l'affichage sur le dispositif d'affichage par ledit ordinateur, sous le contrôle du logiciel, d'une indication représentant une autorisation reçue.

18. Dispositif selon la revendication 11, comportant l'incorporation sur le dispositif d'affichage par ledit ordinateur, sous le contrôle du logiciel, de liens vers un commerçant, un utilisateur, un annonceur ou un distributeur.

19. Dispositif selon la revendication 11, comportant l'affichage sur le dispositif d'affichage par ledit ordinateur, sous le contrôle du logiciel, d'une indication représentant le dépassement par un instrument de paiement d'un niveau d'autorisation.

20. Dispositif selon la revendication 11, comportant la définition sur le dispositif d'affichage par ledit ordinateur, sous le contrôle du logiciel, d'un instrument de paiement par défaut pour chaque commerçant.

21. Dispositif selon la revendication 11, comportant l'affichage par ledit ordinateur, sous le contrôle du logiciel, d'une liste de chaque transaction pour laquelle un instrument de paiement a été utilisé.

22. Dispositif selon la revendication 11, dans lequel l'instrument de paiement est représenté sur le dispositif d'affichage en fonction des préférences de l'utilisateur.

23. Dispositif selon la revendication 11, dans lequel le traitement du paiement est basé sur l'instrument de paiement choisi.
